(19) Europäisches Patentamt / European Patent Office / Office européen des brevets

(11) **EP 1 787 834 A1**

(12) **EUROPEAN PATENT APPLICATION**

(43) Date of publication:
**23.05.2007 Bulletin 2007/21**

(51) Int Cl.:
***B60G 17/018*** (2006.01)

(21) Application number: **06076988.2**

(22) Date of filing: **08.11.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **21.11.2005 US 284159**

(71) Applicant: **Delphi Technologies, Inc.**
**Troy, Michigan 48007 (US)**

(72) Inventor: **Gade, Prasad V.**
**Webster, NY 14580 (US)**

(74) Representative: **Denton, Michael John et al**
**Delphi European Headquarters,**
**64 avenue de la Plaine de France,**
**Paris Nord II,**
**B.P. 65059, Tremblay en France**
**95972 Roissy Charles de Gaulle Cedex (FR)**

(54) **Frequency-weighted vehicle suspension control**

(57) A procedure for synthesizing a state-feedback gain matrix for a vehicle suspension system including active suspension components such as continuously variable semi-active dampers is disclosed. Sensors and/or estimation schemes provide feedback to the controller concerning the vehicle states. A set of frequency-weighted metrics are first quantified and used as part of a full car 7 degree of freedom vehicle model to construct a constrained multi-objective optimization problem. Using commercially available software, a mixed $H_2/H_\infty$ problem is iteratively solved to minimize a set of body control objectives subject to a set of physical control and wheel control related constraints to obtain data, preferably in the form of a plot of the trade-off curve between optimum wheel control and optimum body control. An initial design point is selected from the trade-off curve to calculate a state-feedback gain matrix that provides a reasonable balance between body and wheel control objectives. Additional points may be selected from the trade-off curve to iteratively provide an optimal solution.

**EP 1 787 834 A1**

**Description**

<u>Technical Field</u>

The present invention relates generally to a method of controlling a variable damping semi-active suspension arrangement for an automotive unit. More specifically, the invention is directed to a system and controller for a semi-active suspension damper assembly including position sensors be used by a control unit to determine the control gains that alter the damping characteristics of the suspension system based upon minimization of body control metrics subject to wheel control constraints to optimize the trade-off between ride comfort and vehicle handling.

<u>Background of the Invention</u>

Fully active and semi-active vehicle suspension systems have been developed in an effort to improve both ride comfort and vehicle road-holding performance ("handling"). These suspension systems may include a controller that generates signals to the active suspension components based upon vehicle operating conditions that are measured by sensors. The controller includes a control scheme that utilizes the sensor input to generate signals to the active suspension components to adapt the vehicle suspension to the road conditions being encountered at that instant. Although active and semi-active suspension systems have been somewhat effective, the dual objectives of maximizing ride comfort and handling are often in conflict. If the control scheme is configured to maximize ride comfort, vehicle handling suffers. Conversely, if the control scheme is configured to optimize vehicle handling, poor ride comfort normally results.

Designing/synthesizing a controller in an effort to achieve an optimum balance between ride and handling has involved adjusting a large number of control parameters or gains in an ad-hoc, time-consuming manner. Due to the large number of variables, it is extremely difficult, if not impossible, to achieve an optimum trade-off between ride comfort and vehicle handling.

A known type of active or semi-active suspension system utilizes variable force dampers. Various variable force dampers are disclosed in U.S. Patent Nos. 6,516,257; 5,235,529; 5,096,219; 5,071,157; 5,062,657 and 5,062,658, the contents of each of which are incorporated by reference.

Several integrated body and wheel control arrangements for both active and semi-active suspension systems have been proposed, but such systems have been difficult, if not impossible, to implement given current computational limitations of cost-constrained controllers in a mass-production environment. Known algorithms may utilize output feedback of a state-space vehicle model (e.g., full-car, half-car, quarter-car model) resulting in a controller with a size that is of at least the same order as the plant. In general, these higher-order dynamic compensators are computationally intensive to implement. Although quarter-car based controllers are of lower-order and therefore relatively easy to implement, this type of closed-loop system typically lacks the flexibility required to tune and alter heave, roll and pitch modes independently. These model-based controllers do, however, offer the advantage of designing a robust closed-loop system that unifies the control philosophy of body and wheel modes, thereby significantly reducing the tuning time. An integrated approach also requires fewer tuning parameters because of its ability to make *a-priori* optimal trade-off decision between ride and handling metrics, based on pre-defmed quantifiable objectives.

Various linear robust control strategies such as LQR, $H_\infty$, $H_2$, sliding mode, etc. are known in the art. Mixed $H_2/H_\infty$ control techniques have also been proposed. This mixed approach offers $H_2$ control's capability to minimize quadratic performance criterion for excellent disturbance rejection and $H_\infty$ control's ability to guarantee good performance and stability margins. Known prior art work (Péter Gáspár, István Szászi and József Bokor, "Mixed H2/H∞ control design for active suspension structures," Periodica Polytechnica Ser. Transp. Eng., Vol. 28, No. 1-2, pp. 3-16, 2000 and Jianbo Lu and Mark Depoyster, "Multi-objective optimal suspension control to achieve integrated ride and handling performance," IEEE Transactions on Control Systems Technology, Vol. 10, No. 6, November 2002.) showed potential benefits of mixed-$H_2/H_\infty$ control technique. Gaspar solves a constrained mixed- $H_2/H_\infty$ optimization problem for integrated active suspension control, and Lu addresses the same problem by posing it as an unconstrained optimization task. Although these papers demonstrate the potential effectiveness of the synthesis procedure on half and full-car models respectively, the resulting controllers were of higher-order which are difficult to implement on cost-limited micro controllers utilized in existing vehicles.

<u>Summary of the Invention</u>

The present invention provides a way to synthesize a state-feedback gain matrix for a vehicle suspension system including continuously variable semi-active dampers. Existing sensors and/or estimation schemes are utilized to provide data to the controller concerning the vehicle states. A set of frequency-weighted metrics are first quantified and used as part of a full car 7 degree of freedom vehicle model to construct a constrained multi-objective optimization problem. Using commercially available software, a mixed $H_2/H_\infty$ problem is iteratively solved to minimize a set of body control objectives subject to a set of physical control and wheel control related constraints to obtain a plot of the trade-off curve between wheel control and body control. A design point is then selected from the curve to calculate a state-feedback gain matrix that provides a reasonable balance between body and wheel control objectives. Additional points may be selected from the curve to iteratively arrive at an optimal solution.

These and other features, advantages and objects of the present invention will be further understood and appreciated by those skilled in the art by reference to the following specification, claims and appended drawings.

Brief Description of the Drawings

The present invention will now be described, by way of example, with reference to the accompanying drawings, in which:

Fig. 1 is a prior art full-car model;
Fig. 1A is a partially schematic representation of a controller synthesis procedure according to one aspect of the present invention;
Fig. 2A shows the heave input into the full-car model of Fig. 1;
Fig. 2B shows the roll input into the full-car model of Fig. 1;
Fig. 2C shows the pitch input into the full-car model of Fig. 1;
Fig. 2D shows the warp input into the full-car model of Fig. 1;
Fig. 3 is a block diagram of a full-car model and controller according to another aspect of the present invention;
Fig. 4 is a plot of the trade-off curve between wheel control and body control wherein the true values are shown as a solid line, and the computed bounds are shown as a dashed line;
Fig. 5A is a plot of a heave tire deflection for a computer simulation of a vehicle, wherein the open-loop control is shown as a dotted line, a passive control is shown as a dashed line, and a closed-loop control according to the present invention is shown as a solid line;
Fig. 5B is a plot of a roll tire deflection for a computer simulation of a vehicle, wherein the open-loop control is shown as a dotted line, a passive control is shown as a dashed line, and a closed-loop control according to the present invention is shown as a solid line;
Fig. 5C is a plot of a pitch tire deflection for a computer simulation of a vehicle, wherein the open-loop control is shown as a dotted line, a passive control is shown as a dashed line, and a closed-loop control according to the present invention is shown as a solid line;
Fig. 5D is a plot of a warp tire deflection for a computer simulation of a vehicle, wherein the open-loop control is shown as a dotted line, a passive control is shown as a dashed line, and a closed-loop control according to the present invention is shown as a solid line;
Fig. 6A is a plot of a heave suspension deflection for a computer simulation of a vehicle, wherein the open-loop control is shown as a dotted line, a passive control is shown as a dashed line, and a closed-loop control according to the present invention is shown as a solid line;
Fig. 6B is a plot of a roll suspension deflection for a computer simulation of a vehicle, wherein the open-loop control is shown as a dotted line, a passive control is shown as a dashed line, and a closed-loop control according to the present invention is shown as a solid line;
Fig. 6C is a plot of a pitch suspension deflection for a computer simulation of a vehicle, wherein the open-loop control is shown as a dotted line, a passive control is shown as a dashed line, and a closed-loop control according to the present invention is shown as a solid line;
Fig. 6D is a plot of a warp suspension deflection for a computer simulation of a vehicle, wherein the open-loop control is shown as a dotted line, a passive control is shown as a dashed line, and a closed-loop control according to the present invention is shown as a solid line;
Fig. 7A is a plot of a computer simulation showing the left front corner relative velocity, wherein an open-loop controller is shown as a dotted line, a passive control is shown as a dashed line, and a closed loop controller according to the present invention is shown as a solid line;
Fig. 7B is a plot of a computer simulation showing the right front corner relative velocity, wherein an open-loop controller is shown as a dotted line, a passive control is shown as a dashed line, and a closed loop controller according to the present invention is shown as a solid line;
Fig. 7C is a plot of a computer simulation showing the left rear corner relative velocity, wherein an open-loop controller is shown as a dotted line, a passive control is shown as a dashed line, and a closed loop controller according to the present invention is shown as a solid line;
Fig. 7D is a plot of a computer simulation showing the right rear corner relative velocity, wherein an open-loop controller is shown as a dotted line, a passive control is shown as a dashed line, and a closed loop controller according to the present invention is shown as a solid line;

Fig. 8A is a plot of a computer vehicle simulation showing heave wheel velocity, wherein an open-loop controller is shown as a dotted line, a passive control is shown as a dashed line, and a closed loop controller according to the present invention is shown as a solid line;

Fig. 8B is a plot of a computer vehicle simulation showing roll wheel velocity, wherein an open-loop controller is shown as a dotted line, a passive control is shown as a dashed line, and a closed loop controller according to the present invention is shown as a solid line;

Fig. 8C is a plot of a computer vehicle simulation showing pitch wheel velocity, wherein an open-loop controller is shown as a dotted line, a passive control is shown as a dashed line, and a closed loop controller according to the present invention is shown as a solid line;

Fig. 8D is a plot of a computer vehicle simulation showing warp wheel velocity, wherein an open-loop controller is shown as a dotted line, a passive control is shown as a dashed line, and a closed loop controller according to the present invention is shown as a solid line;

Fig. 9A is a plot of a computer simulation of a vehicle showing the heave body acceleration, wherein an open-loop controller is shown as a dotted line, a passive control is shown as a dashed line, and a closed loop controller according to the present invention is shown as a solid line;

Fig. 9B is a plot of a computer simulation of a vehicle showing the roll body acceleration, wherein an open-loop controller is shown as a dotted line, a passive control is shown as a dashed line, and a closed loop controller according to the present invention is shown as a solid line;

Fig. 9C is a plot of a computer simulation of a vehicle showing the pitch body acceleration, wherein an open-loop controller is shown as a dotted line, a passive control is shown as a dashed line, and a closed loop controller according to the present invention is shown as a solid line;

Fig. 10A is plot showing a computer vehicle model response to a bump of the left front wheel acceleration, wherein a passive control scheme is shown as a dotted line, and a closed-loop controller according to the present invention is shown as a solid line;

Fig. 10B is plot showing a computer vehicle model response to a bump of the heave acceleration, wherein a passive control scheme is shown as a dotted line, and a closed-loop controller according to the present invention is shown as a solid line;

Fig. 10C is plot showing a computer vehicle model response to a bump of the body heave rate, wherein a passive control scheme is shown as a dotted line, and a closed-loop controller according to the present invention is shown as a solid line;

Fig. 10D is plot showing a computer vehicle model response to a bump of the left front suspension deflection, wherein a passive control scheme is shown as a dotted line, and a closed-loop controller according to the present invention is shown as a solid line;

Figs. 11A is plot showing a computer vehicle model response to a ride swells of the left front wheel acceleration, wherein a passive control scheme is shown as a dotted line, and a closed-loop controller according to the present invention is shown as a solid line;

Fig. 11B is plot showing a computer vehicle model response to a ride swells of the heave acceleration, wherein a passive control scheme is shown as a dotted line, and a closed-loop controller according to the present invention is shown as a solid line;

Fig. 11C is plot showing a computer vehicle model response to a ride swells of the body heave rate, wherein a passive control scheme is shown as a dotted line, and a closed-loop controller according to the present invention is shown as a solid line;

Fig. 11D is plot showing a computer vehicle model response to a ride swells of the left front suspension deflection, wherein a passive control scheme is shown as a dotted line, and a closed-loop controller according to the present invention is shown as a solid line;

Fig. 12A is a plot of a computer simulation showing the left front wheel acceleration response to multiple impulses, wherein a passive control scheme is shown as a dotted line, and a closed-loop controller according to the present invention is shown as a solid line;

Fig. 12B is a plot of a computer simulation showing the heave acceleration response to multiple impulses, wherein a passive control scheme is shown as a dotted line, and a closed-loop controller according to the present invention is shown as a solid line;

Fig. 13A is a plot of a computer simulation showing the left front wheel acceleration response to an impact bump, wherein a passive control scheme is shown as a dotted line, and a closed-loop controller according to the present invention is shown as a solid line;

Fig. 13B is a plot of a computer simulation showing the left front wheel acceleration response to an impact bump, wherein a passive control scheme is shown as a dotted line, and a closed-loop controller according to the present invention is shown as a solid line;

Fig. 13C is a plot of a computer simulation showing the left front suspension travel response to an impact bump, wherein a passive control scheme is shown as a dotted line, and a closed-loop controller according to the present invention is shown as a solid line;

Figs. 14A is a plot of a computer simulation showing the left front wheel acceleration response to a large dip in a road surface, wherein a passive control scheme is shown as a dotted line, and a closed-loop controller according to the present invention is shown as a solid line;

Fig. 14B is a plot of a computer simulation showing the heave acceleration response to a large dip in a road surface, wherein a passive control scheme is shown as a dotted line, and a closed-loop controller according to the present invention is shown as a solid line; and

Fig. 14C is a plot of a computer simulation showing the left front relative velocity response to a large dip in a road surface, wherein a passive control scheme is shown as a dotted line, and a closed-loop controller according to the present invention is shown as a solid line.

Description of the Preferred Embodiments

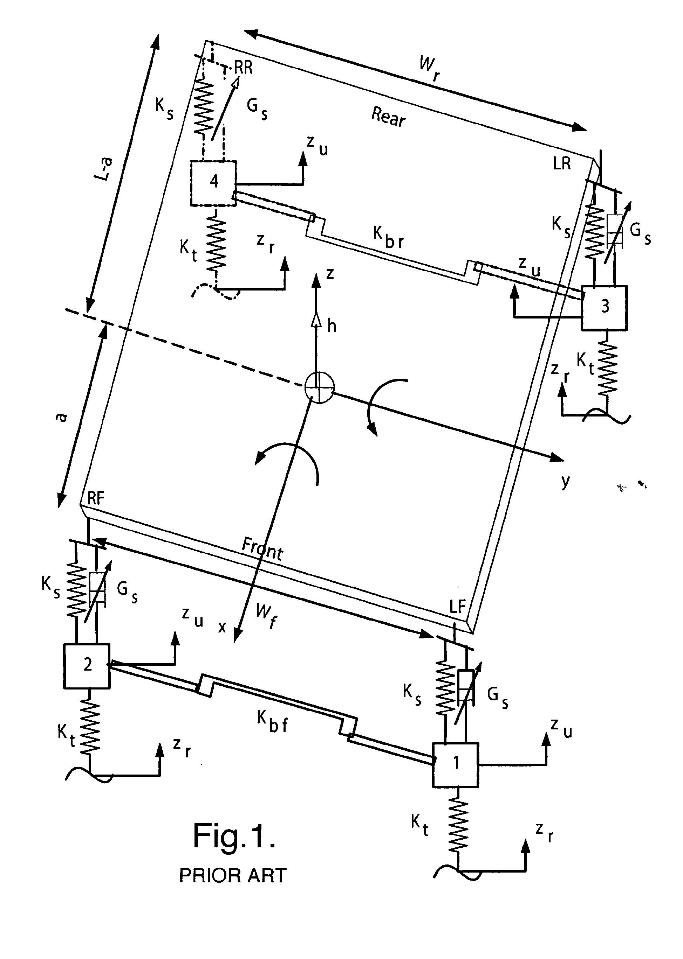

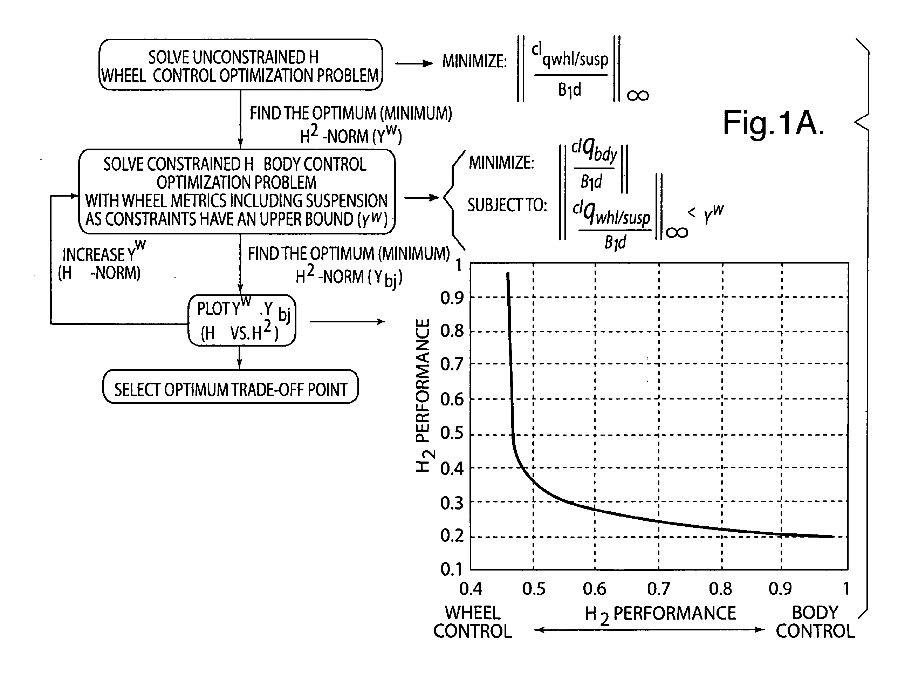

The present invention provides a way to configure a controller of a suspension system having variable force dampers to achieve a trade-off between ride comfort and handling. As discussed in more detail below, the unconstrained $H_\infty$ wheel control optimization problem is solved (Fig. 1A). The $H_2$ body control optimization problem is then solved subject to $H_\infty$ for numerous values of $H_\infty$ to generate a plurality of pairs of data. A plot of $H_\infty$ vs. $H_2$ showing the optimum trade-offs possible is thereby generated. An initial point on the plot is then selected to determine the state-feedback gain matrix utilized in the suspension controller. If simulations and/or vehicle testing reveal that the initial point is not optimum, one or more additional points can be selected for simulation and/or testing to iteratively determine an optimum point on the plot.

The present invention may include use of a seven degree-of freedom (DOF) full-car model (Fig. 1) to tune the body control dynamics (heave, roll and pitch) and the wheel control dynamics independently. One aspect of the present invention is an active suspension control with state-feedback based mixed-$H_2$/$H_\infty$ controller to synthesize a set of gains to cooperatively control body and wheel modes to provide an optimized trade-off between ride comfort and vehicle handling. This may include manipulating the states made available either through sensors or observers, to calculate necessary demand forces to the four corner dampers of a vehicle (or vehicle model). The passivity constraints of semi-active suspension are then added to zero out the demand forces in the active quadrant of force-velocity curve.

As discussed in more detail below, simulation utilizing a set of gains developed using a mixed- $H_2$/$H_\infty$ controller approach demonstrate substantial improvement over and above a soft suspension system (open-loop) and a system equipped with a well-tuned set of passive dampers.

Plant Model

Fig. 1 is a schematic representation of a known prior art 7 DOF full-car model (see Rao Chalasani, "Ride performance potential of active suspension systems - Part II: Comprehensive analysis based on a full-car model," ASME AMD, Symposium on simulation and control of ground vehicles and transportation systems, Vol. 80, pp. 205-234, 1987.). The model consists of linear elements such as springs, dampers and roll bars at both front and rear of the vehicle that are assumed to represent the actual vehicle components. The degrees-of-freedom include 3 angular body displacements (heave, pitch and roll) and 4 wheel vertical displacements. The present invention utilizes a detailed full-car mathematical mode (Fig. 1) developed in Rao Chalasani, "Ride performance potential of active suspension systems - Part II: Comprehensive analysis based on a full-car model," ASME AMD, Symposium on simulation and control of ground vehicles and transportation systems, Vol. 80, pp. 205-234, 1987. The state-variables utilized are 3 body velocities, namely, heave rate, roll rate and pitch rate, 4 relative displacements across the sprung and unsprung masses at each corner, 4 absolute vertical wheel velocities at each corner and 3 dynamic tire deflections for left front (LF), right front (RF) and left rear (LR). According to [3], the 4th tire deflection can be calculated from the tire deflections at other corners. The equation of motion in state-space notation is given by:

$$\dot{\hat{x}} = \hat{A}\hat{x} + \hat{B}_r z_r + \hat{B}_{\dot{r}} \dot{z}_r + \hat{B}_g g + \hat{B}_u u \qquad\qquad 1.01$$

where $z_s$ and $z_2$ are the corner sprung and unsprung mass vertical displacements, $z_r$ is the corner road displacement input, $\dot{z}_r$ is the corner road velocity input, g is acceleration due to gravity, u is the control input, and $\hat{x}$ represents the states comprising of 14 state-variables namely, heave, roll and pitch velocities, 4 suspension deflections, 4 wheel velocities, and 3 dynamic tire deflections as given below:

$$\hat{x} = \dot{h}, \dot{\phi}, \dot{\theta}, (z_s - z_u)_i, \dot{z}_{ui}, (z_u - z_r)_k \}^T \qquad\qquad 1.02$$

where i=1, 2, 3, 4 and k=1, 2, 3.

The model in this representation is a 14th order system. Due to the practical limitations of computational power and throughput capabilities of the micro-controllers, the present invention utilizes a state-feedback approach for the design of a controller. Known vehicles include relative position sensors (and hence the rates), and have systems capable of estimating the body rates and the absolute wheel vertical velocities (from the position sensors, estimated body rates and geometric transformations). Known vehicles may also include dynamic tire deflection strain gauge sensors. Thus, known vehicle sensors and electronics are capable of providing the relevant state information for the suspension controller.

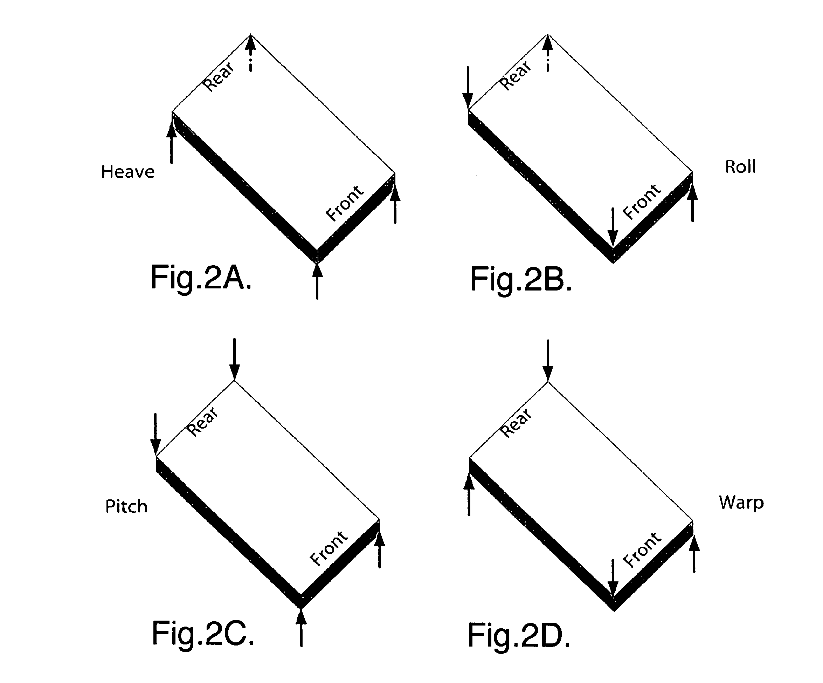

The net effect on the body modes and wheel modes are not a result of road input at each corner alone. Rather, the net effect is actually a function of road inputs at all four corners together. For example, the sum of road inputs at each corner (heave input) affects the heave response of the vehicle. The difference between the corner road inputs at left and the right sides (roll input) of the vehicle contributes to the roll response. Likewise, the difference of the corner road inputs between the front and rear (pitch input) affects the pitch response of the vehicle. Similarly, the warp response is due to the difference between the road inputs at diagonally opposite corners (warp input). These combinations are schematically represented in Fig. 2. To accommodate for these changes, the input matrices $\hat{B}_r$ and $\hat{B}_{\dot{r}}$ are post-multiplied with transformation matrix F defined by:

$$F = \begin{bmatrix} 1 & 1 & 1 & 1 \\ 1 & -1 & 1 & -1 \\ 1 & 1 & -1 & -1 \\ 1 & -1 & -1 & 1 \end{bmatrix} \qquad\qquad 1.03$$

The plant with modified input is therefore expressed as:

$$\dot{\hat{x}} = \hat{A}\hat{x} + \begin{bmatrix} \hat{B}_r F & \hat{B}_{\dot{r}} F & \hat{B}_g \end{bmatrix} \begin{Bmatrix} z_r \\ \dot{z}_r \\ g \end{Bmatrix} + \hat{B}_u u \qquad\qquad 2.01$$

$$= \hat{A}\hat{x} + \hat{B}_1 d + \hat{B}_2 u \qquad\qquad 2.02$$

where

$$d = \begin{Bmatrix} z_r \\ \dot{z}_r \\ g \end{Bmatrix} \qquad \hat{B}_1 = \begin{bmatrix} \hat{B}_r F & \hat{B}_{\dot{r}} F & \hat{B}_g \end{bmatrix} \qquad \hat{B} = \hat{B}_u \qquad 2.03$$

Here d represents the external disturbances such as road displacements, road velocity inputs and gravitational acceleration.

Cost Functions

The objective functions that are to be emphasized are categorized into body and wheel related control metrics.

For good body control (ride-isolation) the transfer functions from heave, roll and pitch accelerations ($\ddot{h}$, $\ddot{\phi}$, $\ddot{\theta}$) to the transformed external disturbances $\hat{B}_1 d$ are emphasized. For good wheel control (road-holding), dynamic tire deflections ($z_u$ - $z_r$) are used as one of the indicators. In particular, the sum of all corner dynamic tire deflections, the difference between the vehicle left hand and right hand side deflections, the difference between the front and rear deflections, and the difference between dynamic tire deflections at diagonally opposite corners are used. Another indicator for good wheel control is the minimization of relative velocities ($\dot{z}_s$-$\dot{z}_u$) across each individual damper. Absolute unsprung mass velocities $\dot{z}_u$ are used as additional cost functions to ensure good road-holding capability (ground-hook principle). This is analogous to the sky-hook principle wherein absolute sprung mass velocities at each corner are minimized. Again, sum of wheel velocities, together with their differences between left and right, front and rear, and at diagonally opposite corners are used as the cost functions.

As discussed in more detail below, the mixed- $H_2/H_\infty$ approach of the present invention involves minimizing body cost functions under the constraints posed by the wheel related cost functions. To ensure physical limitations such as suspension travel (rattle space) are not violated, the suspension deflection ($z_s$ - $z_u$) at each corner is included as an additional constraint. The suspension deflections are also subjected to heave, roll, pitch and warp transformation so that the focus is laid on minimizing heave, roll, pitch and warp suspension deflections. As with the body control cost *transfer functions,* the wheel control constraints together with suspension deflections constraints are also subjected to transformed external disturbances $\hat{B}_1 d$, so that constraint *transfer functions* are emphasized.

These cost functions put together are represented as,

$$\hat{q} = \hat{C}\hat{x} + \hat{D}_1 d + \hat{D}_2 u \qquad\qquad 2.04$$

Typically, frequency weighted body accelerations ($\ddot{h},\ddot{\phi},\ddot{\theta}$) are used for evaluating ride comfort. Because the human body most strongly feels accelerations in the 2.5-8 Hz range, a band pass filter in that range is used as the weighting functions for the three body accelerations. For wheel control metrics, the relative velocities between the sprung and unsprung masses at each corner are minimized in the 9-12 Hz frequency range to ensure maximum road-holding capability. It will be understood that somewhat different frequency ranges could be utilized according to other aspects of the present invention.

Assuming that the weighting functions associated with the cost functions are given by,

$$\dot{x}_w = A_w x_w + B_w \hat{q} \qquad\qquad 2.05$$

$$q_w = C_w x_w + D_w \hat{q} \qquad\qquad 2.06$$

the plant mode in Equations 2.01 and 2.02 can then be augmented to accommodate the above functions as follows

$$\dot{x} = Ax + B_1 d + B_2 u \qquad\qquad 2.07$$

$$q = Cx + D_1 d + D_2 u \qquad\qquad 2.08$$

where

$$x = \left\{ \begin{array}{c} x_w \\ \hat{x} \end{array} \right\} \qquad\qquad 2.09$$

$$A = \begin{bmatrix} A_w & B_w \hat{C} \\ 0 & \hat{A} \end{bmatrix} \qquad\qquad 2.10$$

$$B_1 = \begin{bmatrix} B_w \hat{D}_1 \\ \hat{B}_1 \end{bmatrix} \qquad\qquad 2.11$$

$$B_2 = \begin{bmatrix} B_w \hat{D}_2 \\ \hat{B}_2 \end{bmatrix} \qquad\qquad 2.12$$

$$C = \begin{bmatrix} C_w & D_w \hat{C} \end{bmatrix} \qquad\qquad 2.13$$

$$D_1 = \begin{bmatrix} D_w \hat{D}_1 \end{bmatrix} \qquad\qquad 2.14$$

$$D_2 = \begin{bmatrix} D_w \hat{D}_2 \end{bmatrix} \qquad\qquad 2.15$$

<u>Problem Statement</u>

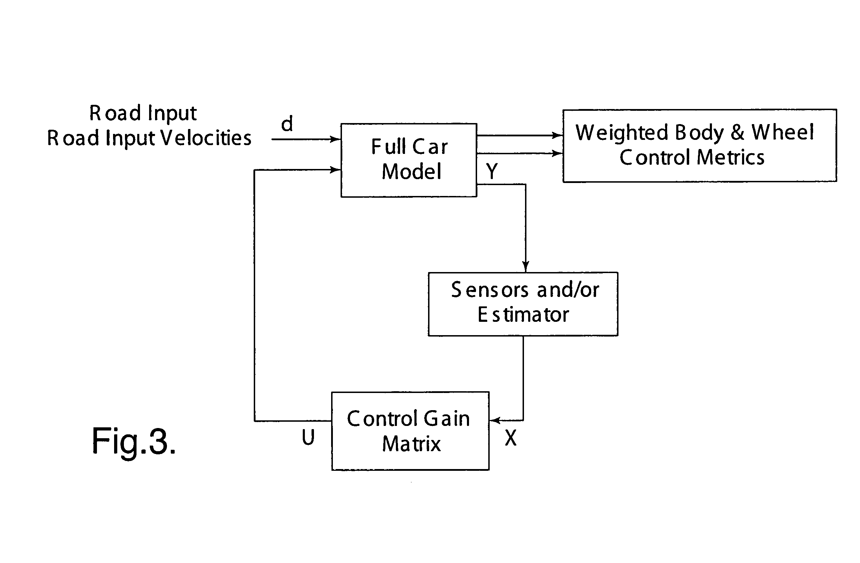

Given the plant model and the body/wheel control metrics described above, the problem of ride and handling trade-off can be shown diagrammatically as illustrated in Fig. 3.

In Fig. 3, the states which are available from sensors or other estimation schemes, are directly fed-back to synthesize a controller gain matrix that minimizes body and wheel control metrics in the presence of road velocity inputs acting as extraneous disturbance. Mathematically, the state-space representation of the problem is given as:

$$\dot{x} = Ax + B_1 d + B_2 u \qquad\qquad 3.01$$

$$^{ol}q_\infty = C_1 x + D_{11} d + D_{12} u \qquad\qquad 3.02$$

$$^{ol}q_2 = C_2 x + D_{22} u \qquad\qquad 3.03$$

where $^{ol}q_\infty$ denotes open-loop wheel control metrics and $^{ol}q_2$ denotes open-loop body control metrics. If the open-loop transfer matrix (defined for a multi-input, multi-output system as a matrix whose elements consists of individual transfer functions) between extraneous disturbances d and wheel metrics ($^{ol}q_\infty$) is denoted by $^{ol}T_\infty$ and similarly if the open-loop transfer matrix between d and body metrics ($^{ol}q_2$) is denoted by $^{ol}T_2$, then following the same procedure as in Jianbo Lu and Mark Depoyster, "Multi-objective optimal suspension control to achieve integrated ride and handling performance," IEEE Transactions on Control Systems Technology, Vol. 10, No. 6, November 2002., they could be used to normalize the corresponding variables as shown below:

$$^{o\ell}\overline{q}_{\infty i} = \frac{1}{\left\| ^{o\ell}T_{\infty i}\right\|}\left[C_{1i}x + D_{11i}d + D_{12i}u\right] \qquad 3.04$$

$$^{o\ell}\overline{q}_{2i} = \frac{1}{\left\| ^{o\ell}T_{2i}\right\|}\left[C_{2i}x + D_{22i}u\right] \qquad 3.05$$

The term "open-loop" in this context refers to a case wherein the dampers are not commanded any demand forces (zero damping forces) and are in a default soft state.

If $K_c$ represents the to-be-designed state-feedback gain matrix, then a closed-loop system along with the metrics can be expressed as:

$$\dot{x} = \left(A + B_2K_c\right)x + B_1d \qquad 3.06$$

$$^{c\ell}\overline{q}_{\infty i} = \frac{1}{\left\| ^{o\ell}T_{\infty i}\right\|}\left[(C_{1i} + D_{12i}K_c)x + D_{11i}d\right] \qquad 3.07$$

$$^{c\ell}\overline{q}_{2i} = \frac{1}{\left\| ^{o\ell}T_{2i}\right\|}\left[C_{2i}x + D_{22i}K_c\right]x \qquad 3.08$$

If the closed-loop transfer matrices between the extraneous disturbances d and wheel metrics $\left(^{c\ell}\overline{q}_{\infty}\right)$ and body metrics $\left(^{c\ell}\overline{q}_2\right)$ are denoted by $\left(^{c\ell}\overline{T}_{\infty}\right)$ and $\left(^{c\ell}\overline{T}_2\right)$ respectively, then the optimization problem of ride and handling trade-off can be quantified in the mixed- $H_2/H_{\infty}$ domain context.

The mixed- $H_2/H_{\infty}$ control synthesis problem involves designing a dynamic or static compensator ($K_c$) that solves any one of the following three optimization problems involving closed-loop transfer matrices:

$$\bullet \text{ Minimize: } \left\| ^{c\ell}\overline{T}_2\right\|_2 \quad \text{ subject to: } \quad \left\| ^{c\ell}\overline{T}_{\infty}\right\|_{\infty} < \gamma \qquad 3.09$$

$$\bullet \text{ Minimize: } \left\| ^{c\ell}\overline{T}_{\infty}\right\|_{\infty} \quad \text{ subject to: } \quad \left\| ^{c\ell}\overline{T}_2\right\|_2 < \kappa \qquad 3.10$$

$$\bullet \text{ Minimize: } \alpha\left\| ^{c\ell}\overline{T}_2\right\|_2^2 + \beta\left\| ^{c\ell}\overline{T}_{\infty}\right\|_{\infty}^2 \qquad 3.11$$

The selection of any one of the above methods depends on whether body or wheel control or none are considered as a constraints for the solving the ride problem. Here, a static state-feedback gain matrix ($K_c$) is designed to optimize body control subject to wheel and suspension related constraints. This has been found to be computationally friendly in yielding a predictable trade-off curve.

The $H_2$-norm of the closed-loop transfer matrix $^{c\ell}\overline{T}_2$ represents the variance of $^{c\ell}\overline{q}_2$ with respect to a unit covariance white-noise disturbance d.

$$\left\|^{c\ell}\overline{T}_2\right\|_2^2 = \frac{1}{2\pi}\int_{-\infty}^{\infty}Tr\left[^{c\ell}\overline{T}_2^{\,H}(j\omega)\,^{c\ell}\overline{T}_2(j\omega)\right]d\omega \qquad 3.12$$

Restated, the $H_2$-norm is equal to the expected root-mean-square (RMS) value of the output in response to white noise excitation.

The $H_\infty$-norm of the closed-loop transfer matrix $^{c\ell}\overline{T}_\infty$ represents the root-mean-square (RMS) gain (peak magnitude of the frequency response of the transfer matrix) which is an indicator of the worst-case disturbance d on the metrics $^{c\ell}\overline{q}_\infty$. In other words, the $H_\infty$-norm is equal to the peak of the transfer function/matrix.

$$\left\|^{c\ell}\overline{T}_\infty\right\|_\infty = \sup_\omega \overline{\sigma}(^{c\ell}\overline{T}_\infty(j\omega)) \qquad 3.13$$

where $\overline{\sigma}$ is the maximum of the singular-values of the transfer matrix at each frequency. Singular values of any matrix (A) is defined as the square root of the eigenvalues of $A^T A$.

Controller Synthesis Procedure

The control synthesis procedure involves minimizing an unconstrained wheel control problem utilizing known mathematics software to find the upper bound ($\gamma\omega$). Mathematically, it is stated as:

$$\text{Minimize:} \qquad \left\|^{c\ell}\overline{T}_\infty\right\|_\infty \qquad 4.01$$

Minimizing $H_\infty$-norm implies minimizing the peak of the largest singular value (i.e. worst direct, worst frequency). The resulting upper bound solution ($\gamma\omega$) then forms the constraint for the constrained optimization problem that involves minimizing body control metrics subject to structural and wheel control related constraints. The bound on wheel control metrics ($\gamma\omega$) is gradually increased in small increments and the constrained optimization problem is solved again iteratively. Minimizing the $H_2$-norm corresponds to minimizing the sum of the square of all the singular values over all frequencies (i.e. average direction, average frequency). Mathematically, it is represented as follows:

$$\text{Minimize:} \qquad \left\|^{c\ell}\overline{T}_2\right\|_2 \qquad 4.02$$

$$\text{Subject to:} \qquad \left\|^{c\ell}\overline{T}_\infty\right\|_\infty < \gamma_j \qquad 4.03$$

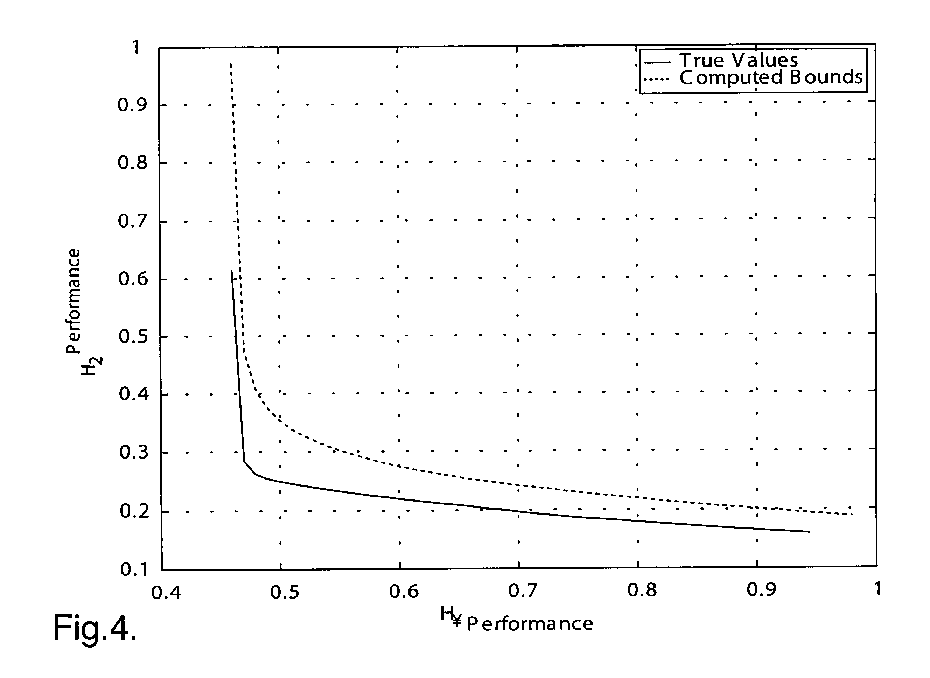

and states that the goal is to design a state-feedback law $u = K_c x$ that minimizes the body control metrics without violating the constraints imposed by the physical and wheel control related constraints. This problem is solved for each $\gamma_j$ utilizing the Linear Matrix Inequality (LMI) toolbox software of the Matlab® routine called *msfsyn* see [insert 4]. This process is repeated and a plot is drawn between $\gamma_j$'s on x-axis and $H_{2j}$-norms of the resulting closed-loop transfer matrix $^{c\ell}T_{2j}$ on y-axis. Fig. 4 is an example of an $H_\infty$ vs. $H_2$ plot generated using this technique. The control engineer selects an appropriate design point ($\gamma^*$) on the plot where an optimum compromise between body and wheel control may be obtained. This selection process is iterated between objectives as well as subject evaluations of the vehicle under several road profiles.

Example

Referring to Fig. 1, the following parameters have been used for the vehicle model to demonstrate the simulation results presented in this section: sprung mass ($m_s$) = 1528 kg, front unsprung mass ($m_{uf}$) = 111 kg, rear unsprung mass ($m_{ur}$) = 141 kg, roll moment of inertia ($I_{xx}$) = 515 kg.m$^2$, pitch moment of inertia ($I_{yy}$) = 2853 kg.m$^2$, tire stiffness ($K_t$) = 240.5 kN/m, front spring stiffness ($K_{sf}$) = 30.6 kN/m, rear spring stiffness ($K_{sr}$) = 26 kN/m, front roll bar stiffness ($K_{bf}$) = 27.3 kN/m, rear roll bar stiffness ($K_{br}$) = 10 kN/m, wheelbase (L) = 2.9 m, track width ($w_{f,r}$) = 1.5 m, e.g. distance behind front axle (a) = 1.3 m, roll center height ($h_{f,r}$): front = 0.11 m; rear = 0.13 m, e.g. height ($h_{cg}$) = 0.6 m; open-loop damping ($G_{op}$): front = 300 N/m/s: rear = 150 N/m/s, passive damping ($G_p$): front = 2.2 kN/m/s; rear = 1.4 kN/m/s.

The synthesis procedure described above is utilized to solve an unconstrained wheel control problem by minimizing the $H_\infty$-norm of the metrics. The optimal solution ($\gamma\omega$) for this example is found to be 0.45. The resulting open and closed-loop norms of the body and wheel controls metrics are shown below:

| **Wheel Control** | | | | | |
|---|---|---|---|---|---|
| | Tire defl | Susp defl | Abs Whl vel | Rel Vel | HRP accel |
| OL-norms | 1.85 | 1.89 | 119.02 | 60.93 | 771.39 |
| CL-norms | 0.13 | 0.47 | 15.65 | 3.02 | 88411.83 |

Clearly only the wheel control $H_\infty$-norms are significantly reduced during the optimization process. Minimizing the $H_\infty$-norm of a transfer matrix is equivalent to minimizing its Root Mean Square (RMS) value over the entire amount of frequencies and can also be interpreted as pushing down the frequency plot's worst-case magnitude (for sinusoidal inputs) at any frequency (worst direction, worst frequency). While minimization of $H_2$-norm of a transfer matrix can be interpreted as minimizing the sum of the squares of all magnitudes over all frequencies in response to white-noise excitation, it can also be thought of as pushing down the entire magnitude plot over all frequencies (average direction, average frequency). Because the body control metrics are left numerically uncontrolled (i.e., not optimized), large numbers for body control metrics are generated as shown in the table above. Thus, the body's heave, roll and pitch accelerations are amplified, resulting in an uncomfortable ride. The following table contains the closed-loop norms when an unconstrained optimization problem involving body control metrics are minimized.

| **Body Control** | | | | | |
|---|---|---|---|---|---|
| | Tire defl | Susp defl | Abs Whl vel | Rel Vel | HRP accel |
| OL-norms | 1.85 | 1.90 | 119.02 | 60.93 | 771.39 |
| CL-norms | 60.17 | 61.85 | 4473.82 | 2258.95 | 6.6e-5 |

As in the wheel control case, the large numbers for wheel metrics in the above table are indication of the fact that only ride metrics were optimized, while the wheel metrics were left numerically uncontrolled and are equivalent to an extreme case where the wheels exhibit significant hop.

Next, a constrained optimization problem is solved utilizing the Matlab® Linear Matrix Inequality (LMI) toolbox software routine called *msfsyn.* This process involves minimization of body control metrics subject to wheel control constraints being less than the optimal $\gamma$ value. The value of the scalar constraint $\gamma$ is incrementally increased in the region $\gamma\omega < \gamma_j < 1$ and each resulting optimization problem is iteratively solved. The $H_2$-norm of the corresponding body control metrics is noted.

After a sufficient number of such $H_\infty$, $H_2$ pairs of data are generated, a plot of $H_2$-norm and $\gamma_j$ ($H_\infty$-norm of all the constraints) is drawn as a trade-off curve shown in Fig. 4. As the value of $\gamma$ is increased (i.e. as the constraints are relaxed), good body control is achieved but at the cost of poor wheel control performance. Conversely, the lower values of $\gamma$ tend to jeopardize body control performance. The dashed curve in Fig. 4 represents the closed-loop norms as computed by the numerical routine *msfsyn,* and the solid curve corresponds to the actual RMS gains of closed-loop transfer matrix $T_\infty$ versus closed-loop $H_2$-norms of transfer matrix $T_2$.

In the present example, a $\gamma$ value of 0.5 (Y1, Fig. 4) is initially selected from the chart of Fig. 4 as the design point and the corresponding feedback gain matrix ($K_c$) is calculated using the LMI routine. Based on actual simulation results (discussed below) using the CarSim® nonlinear vehicle model software, the value of $\gamma$ is further fined tuned ($\gamma^*$ = 0.57) to bias towards better wheel control performance. It will be understood that numerous CarSim® simulations may be run to iteratively determine the optimum value for $\gamma^*$. This optimum value may be a subjectively optimum value as determined by the control engineer, or it could be determined based preselected design criteria. The resulting norms for this mixed-$H_2/H_\infty$ are tabularized as shown below:

| Integrated Body/Wheel Control | | | | | |
|---|---|---|---|---|---|
| | Tire defl | Susp defl | Abs Whl vel | Rel Vel | HRP accel |
| OL-norms | 1.85 | 1.90 | 119.02 | 60.93 | 771.39 |
| CL-norms | 0.15 | 0.51 | 11.49 | 4.26 | 90.09 |

Simulation Results

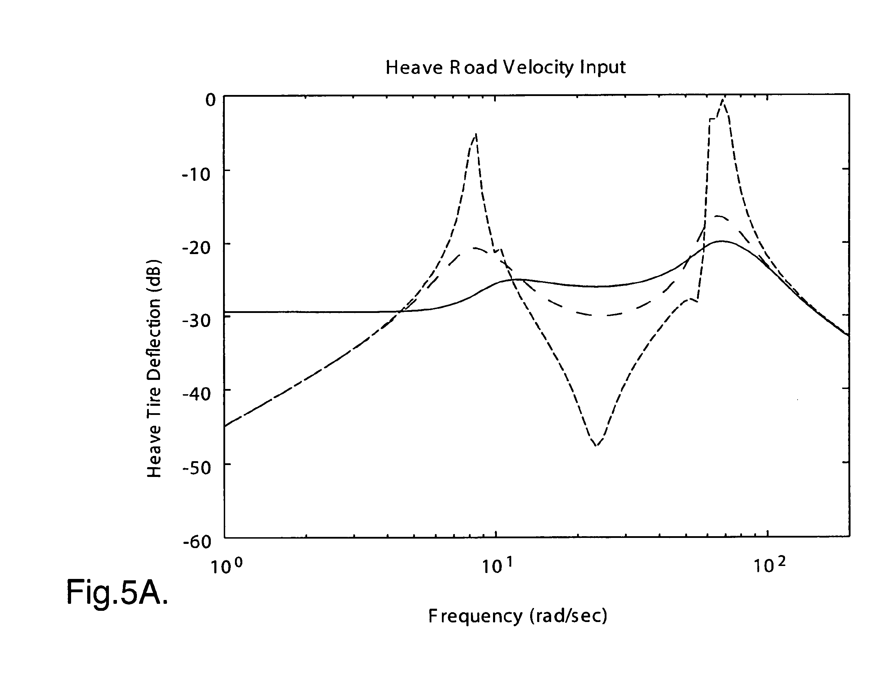

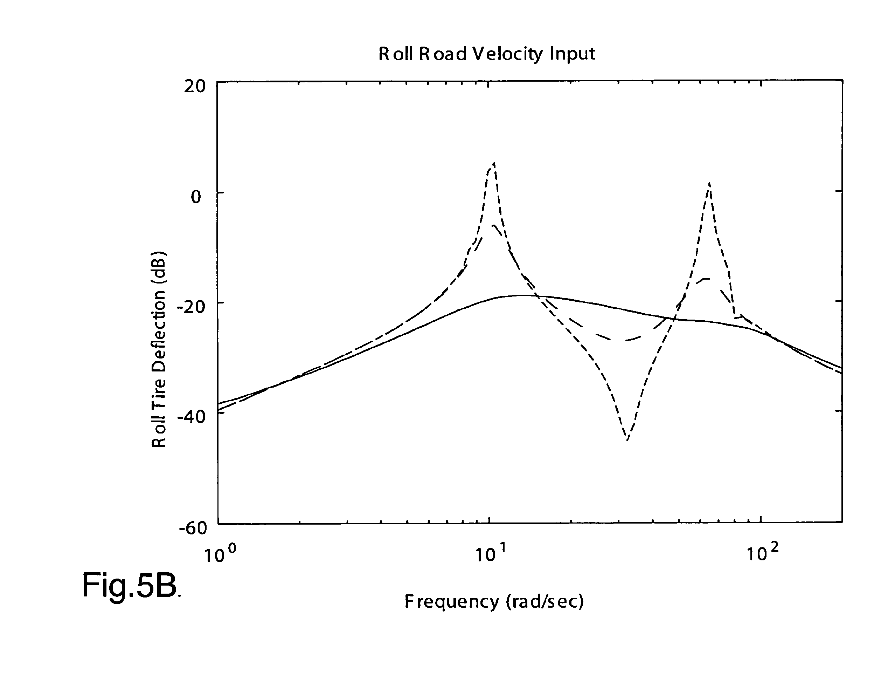

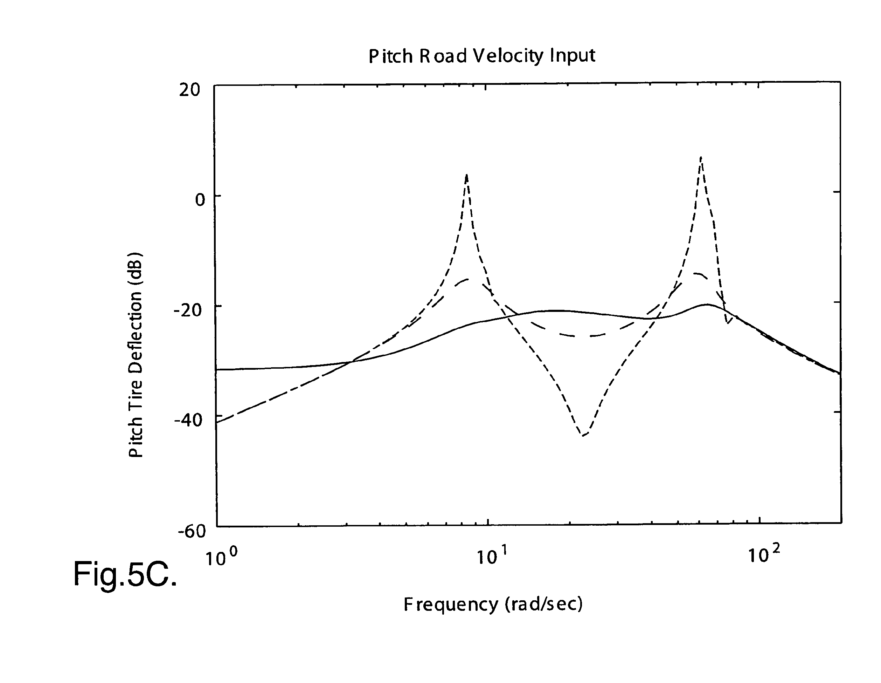

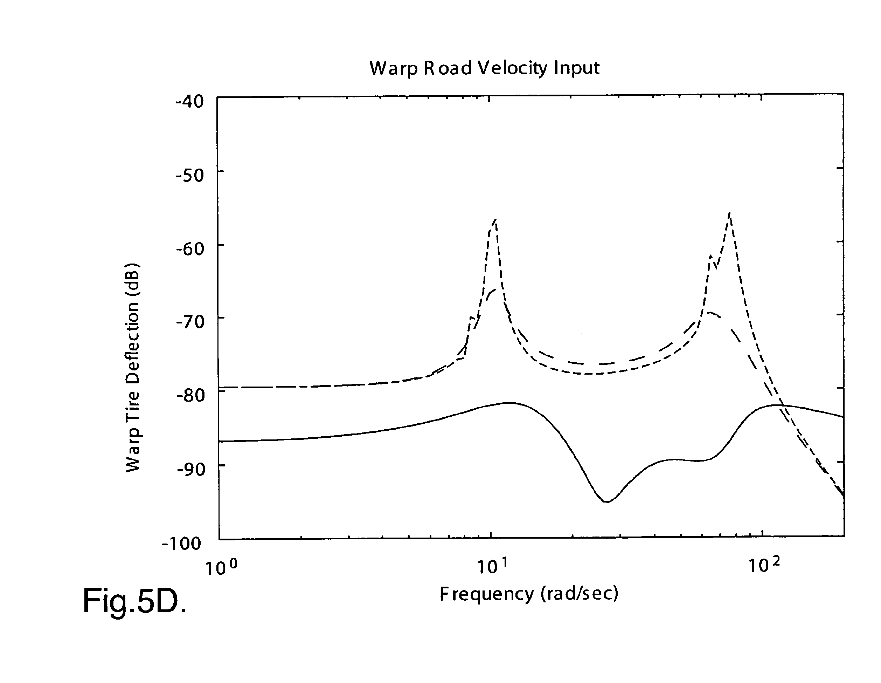

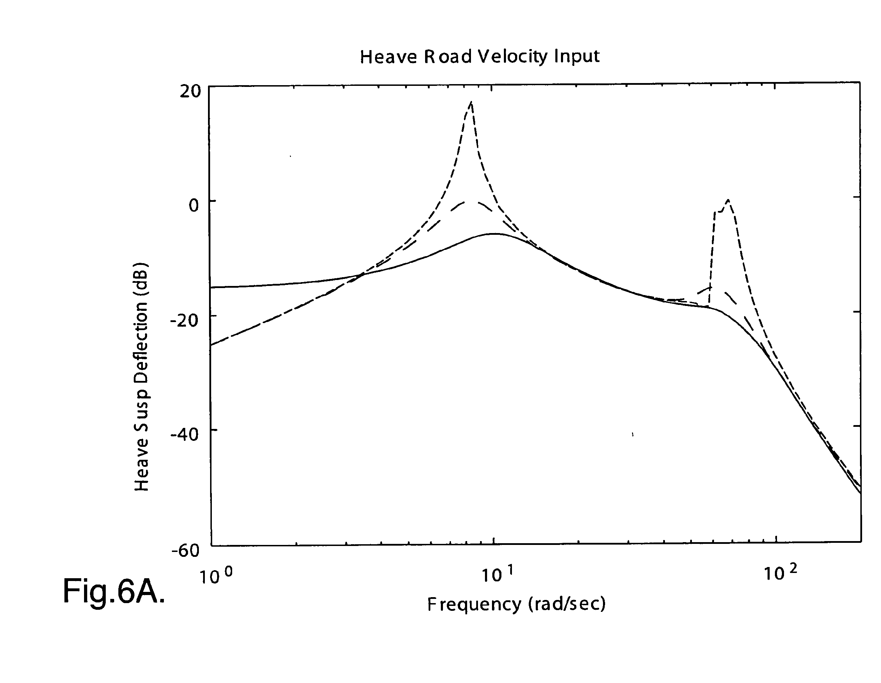

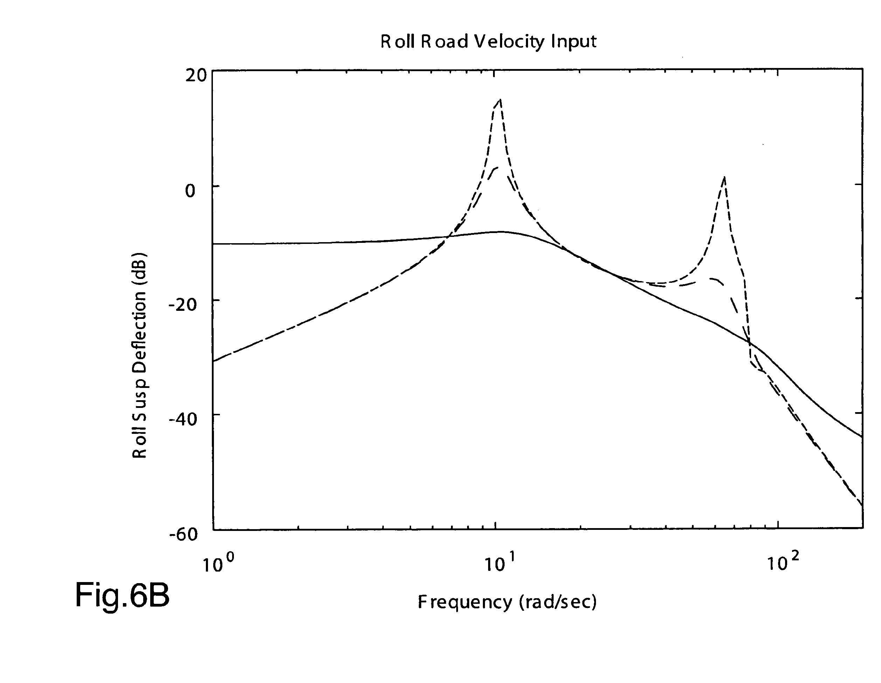

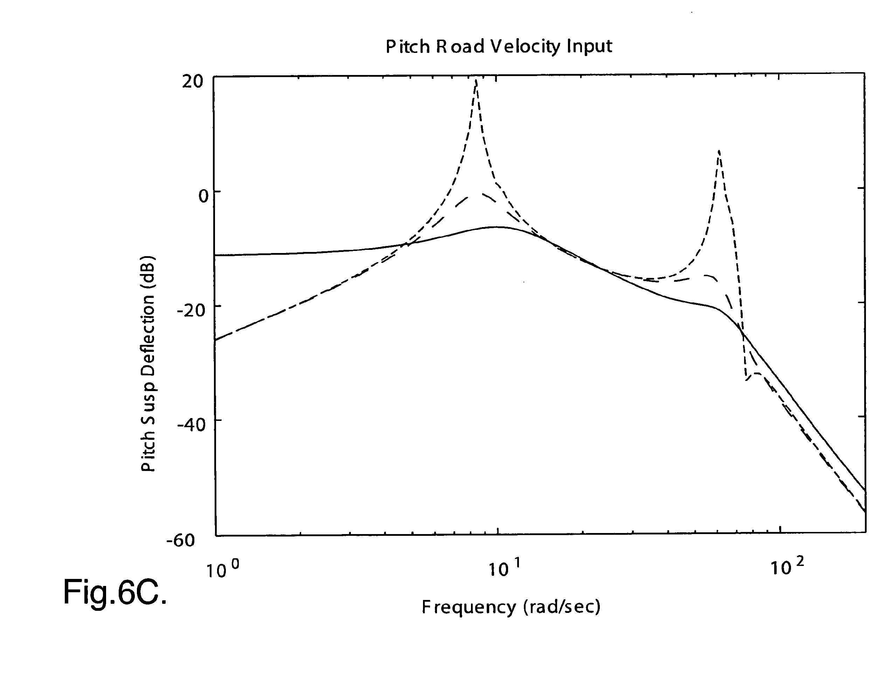

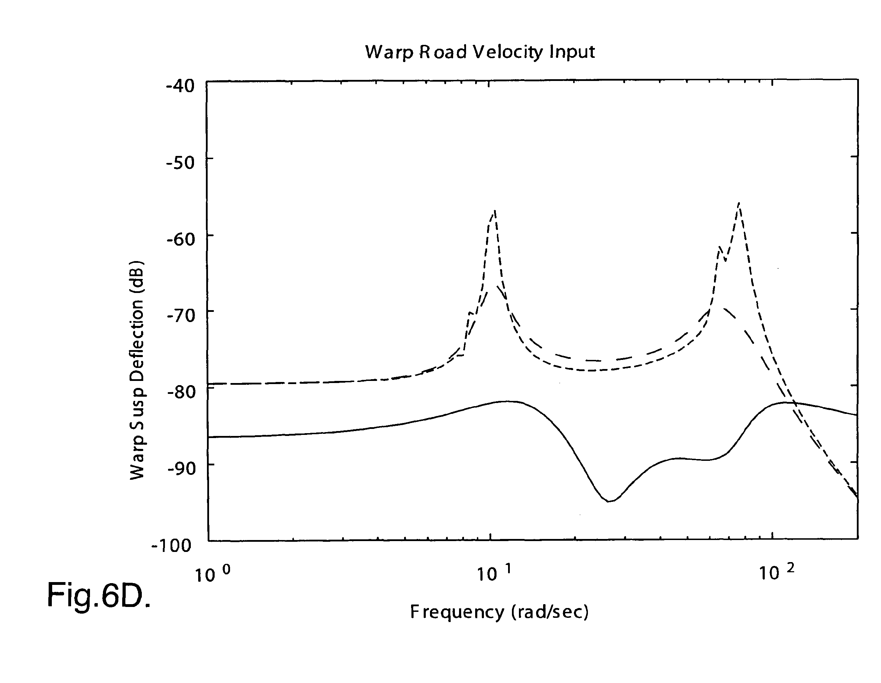

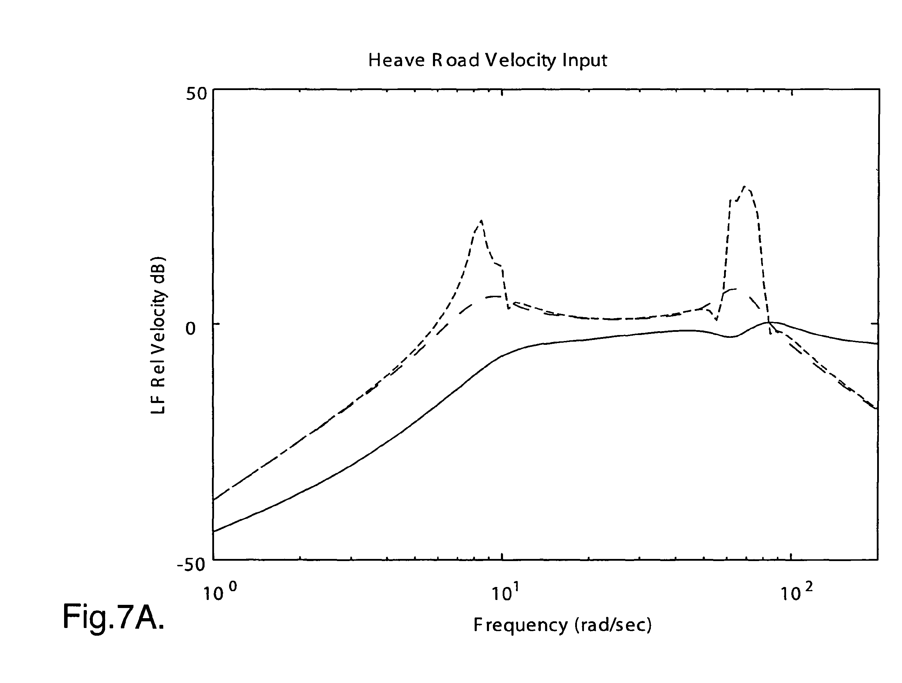

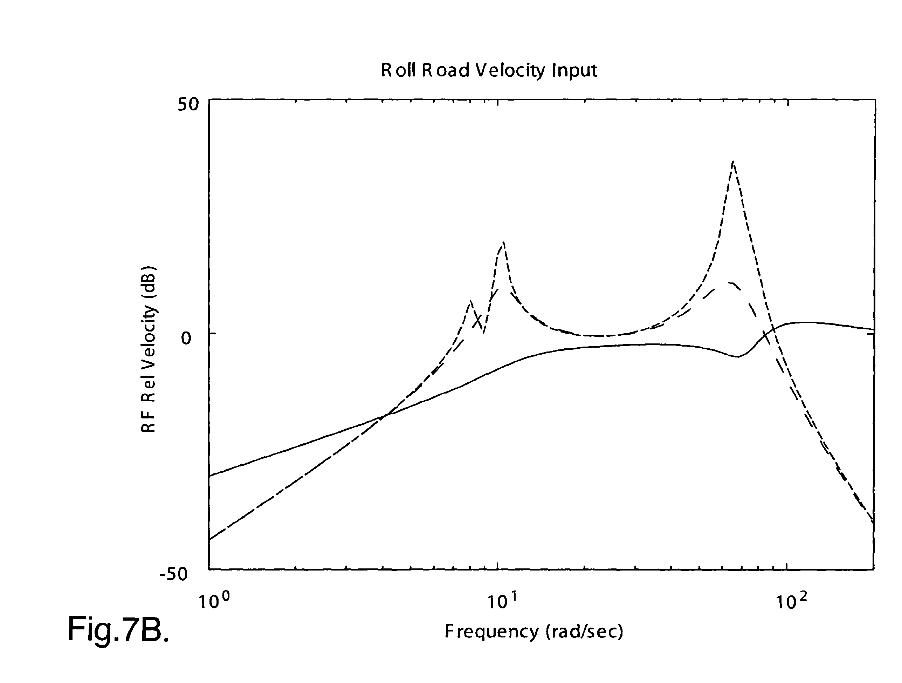

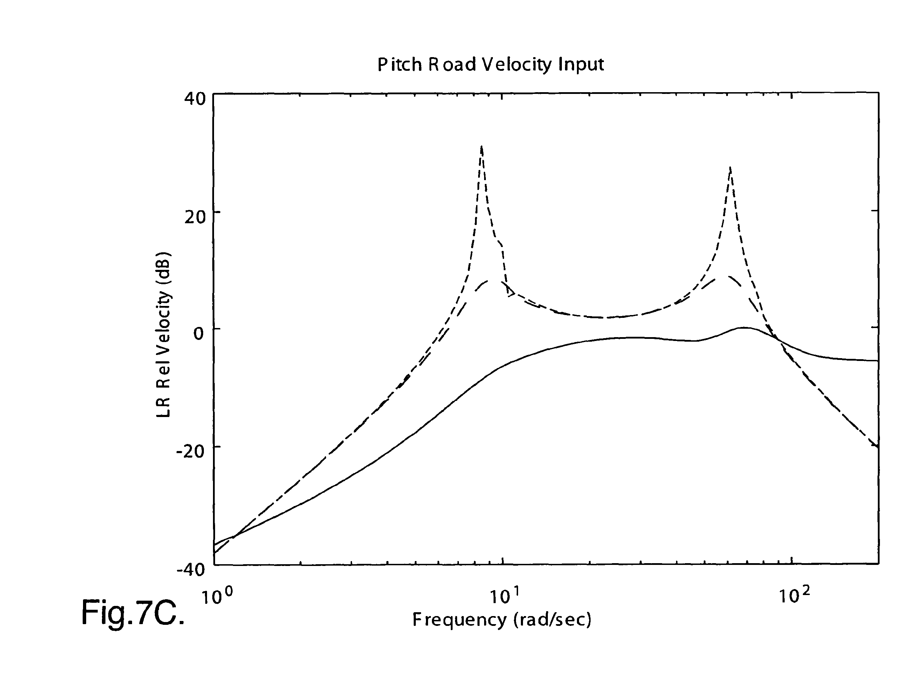

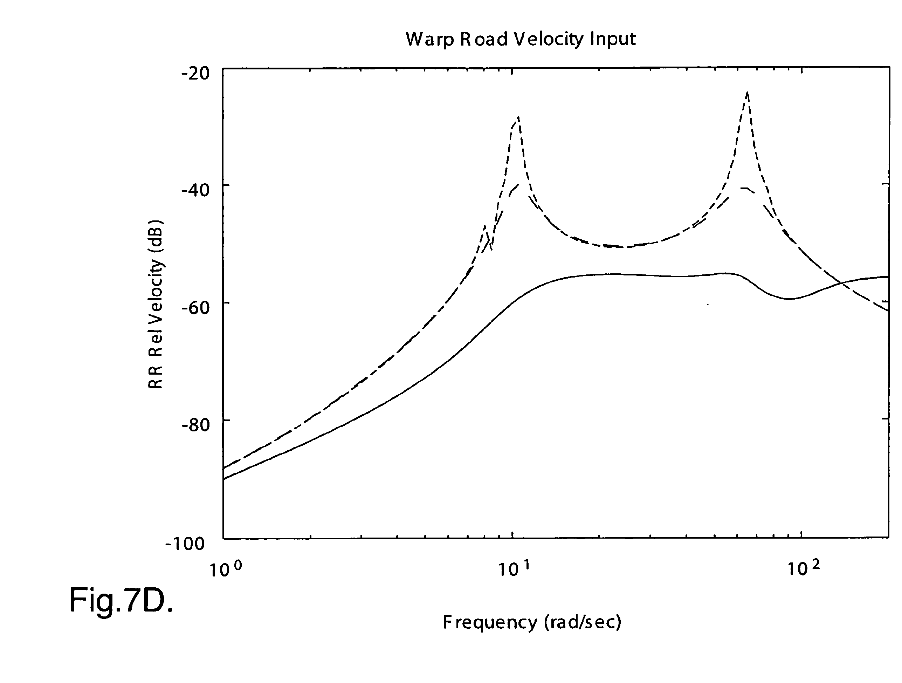

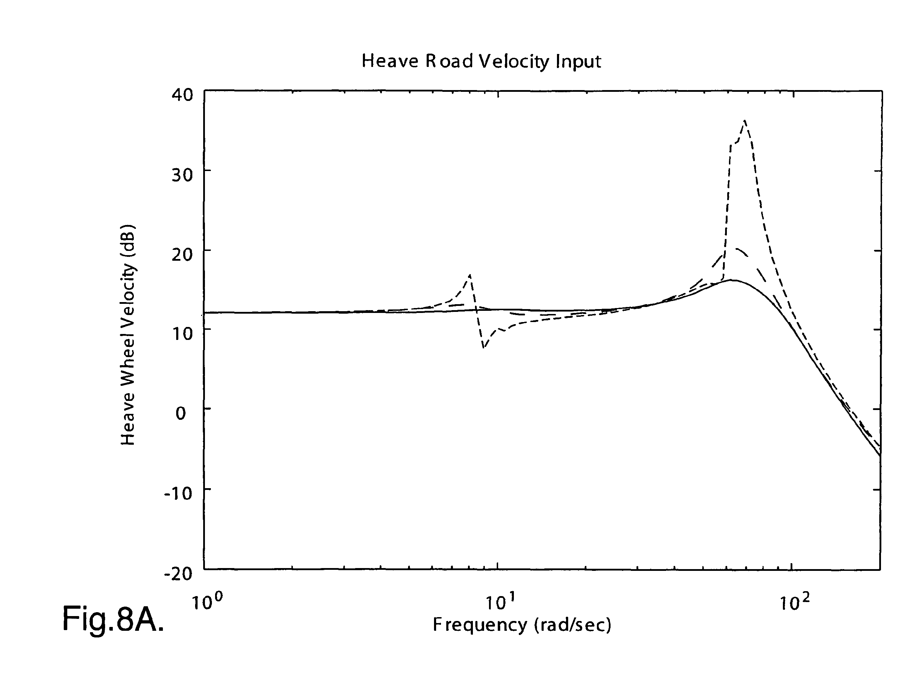

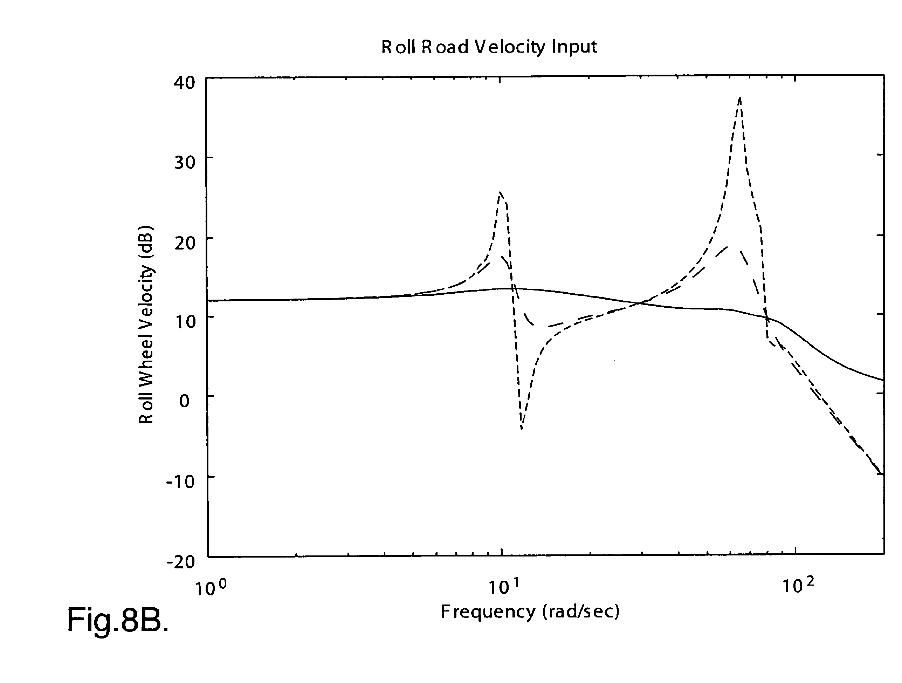

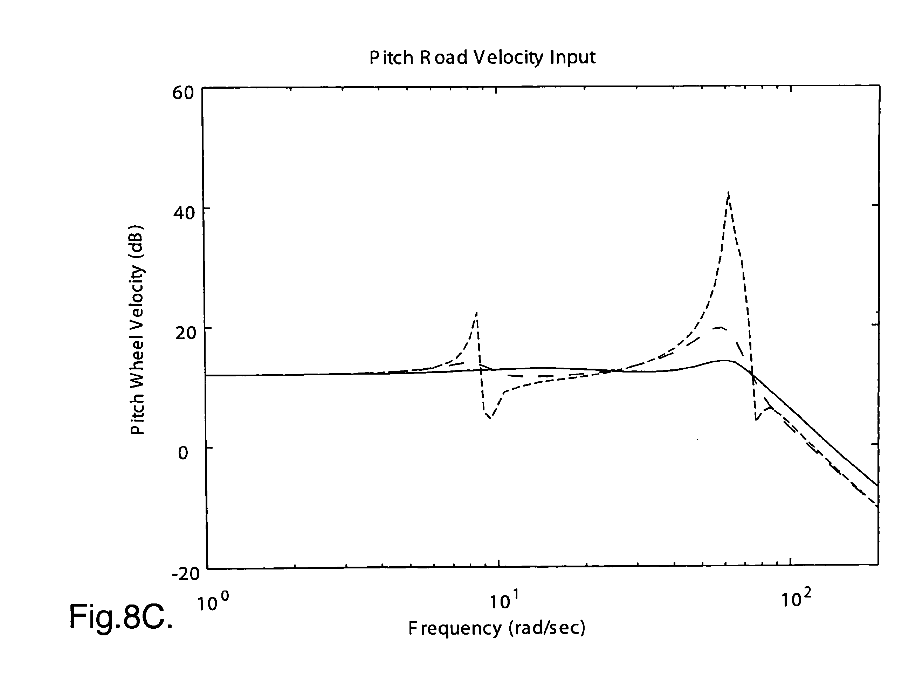

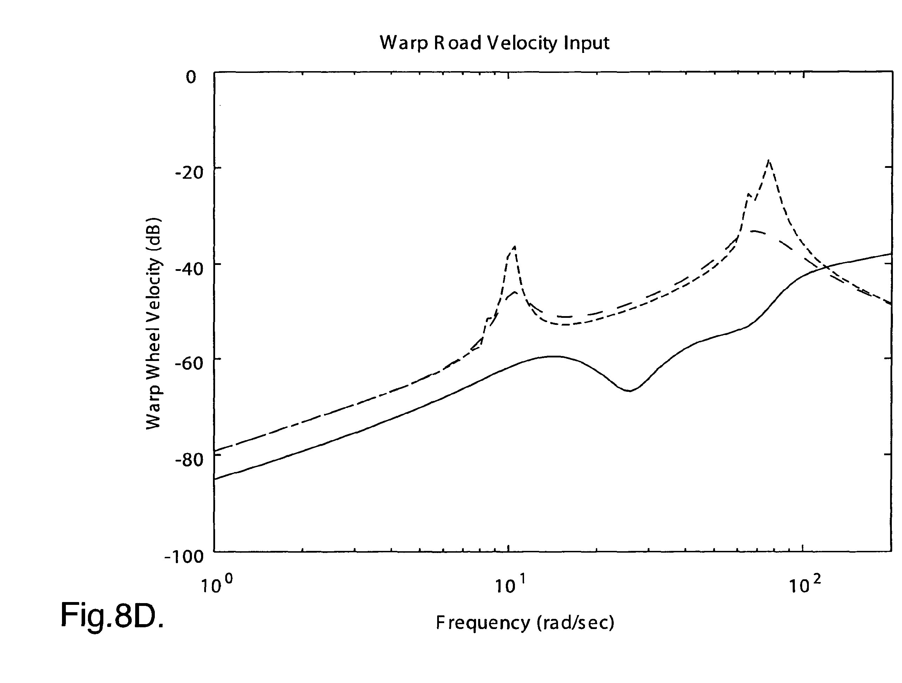

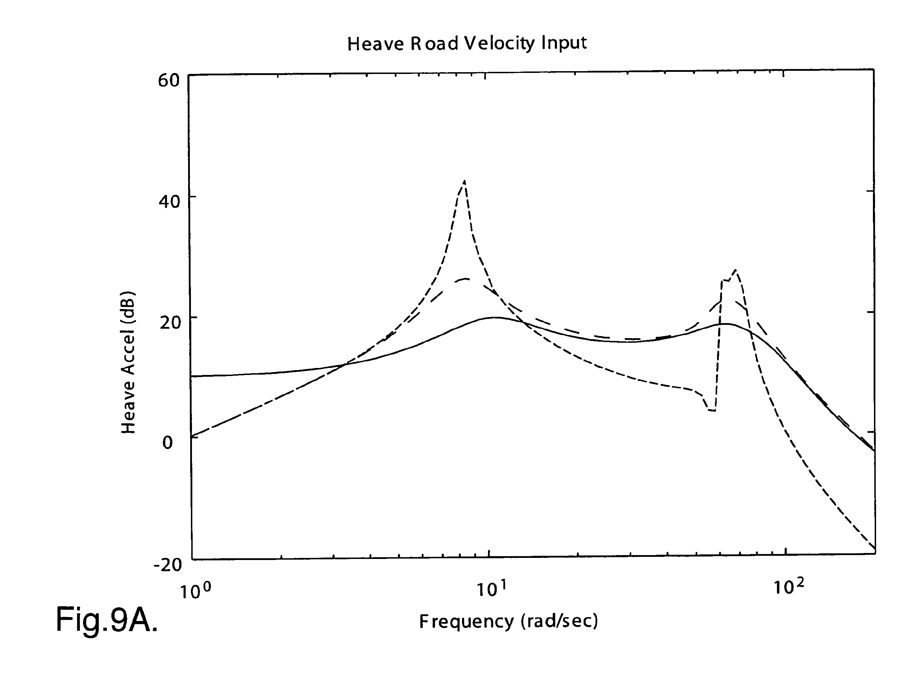

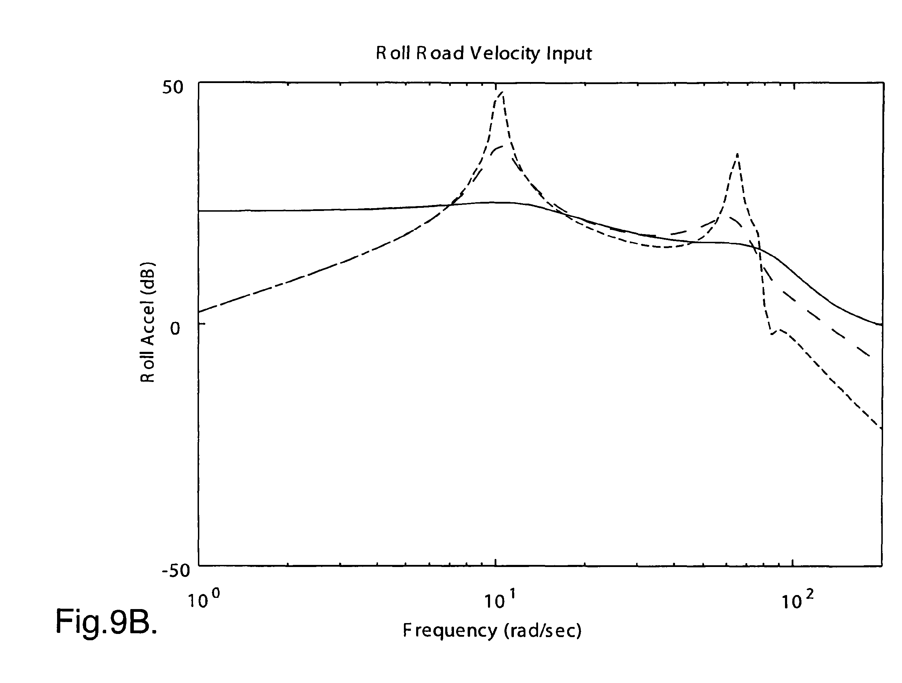

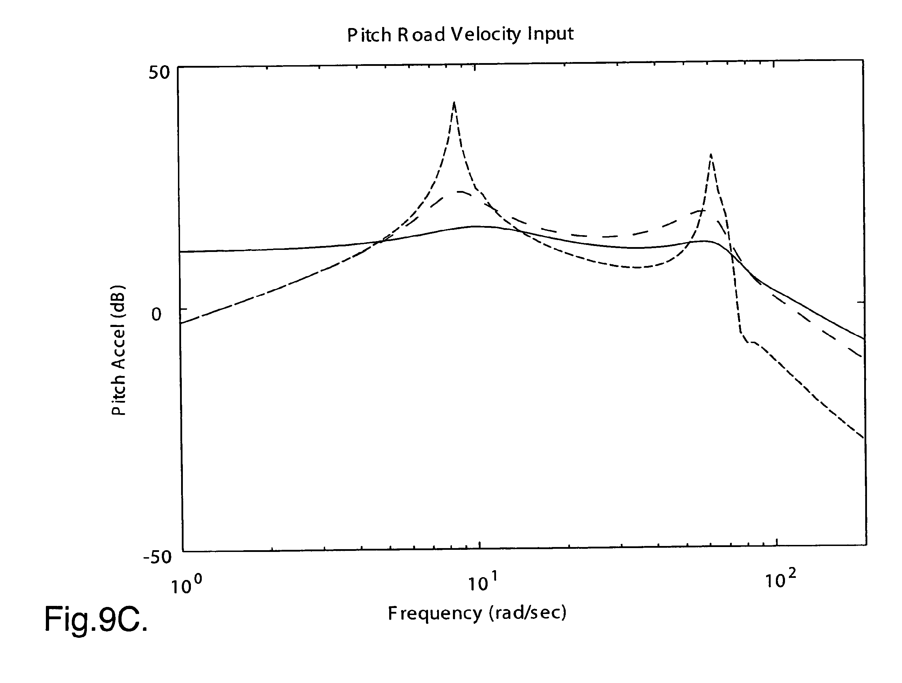

Once the controller $K_c$ is developed, it is implemented in the CarSim® software program as a closed-loop state-feedback gain matrix acting on the estimated states x. In the illustrated example, the gain matrix is input into an existing CarSim® vehicle model. It will be appreciated that numerous other simulations could be utilized. The singular-value plots of the closed-loop wheel and body control metrics are shown in Figs. 5-9. In Fig. 5, the magnitude plot demonstrates significant reduction in dynamic tire deflections in the 9-12 Hz region using a controllable semi-active damper, as compared to a well-tuned hydraulic damper. It is also readily apparent that the improvement over the open-loop case (no damping) is even more significant. The rattle-space (i.e. physical travel limits) constraint of the damper is also checked using the singular-value plot of Fig. 6 for heave, roll, pitch and warp road inputs. In all these cases, the responses for the controller $K_c$ obtained by the procedure described above are lower than the corresponding baseline passive system responses. In the 9-12 Hz range (Fig. 7) the relative velocities at each of the four corners across the dampers are well below the open-loop and passive levels, indicating improved road-holding capability (i.e. handling). Another indicator for good wheel control is the corner wheel-hub velocity response to combined road inputs. These are shown in Fig. 8, illustrating that the peak value in wheel-hop frequency range is minimized effectively to levels below those of the open-loop and passive cases. The singular-value plots of body control metrics, namely, heave, roll and pitch accelerations subject to heave, roll, pitch and warp road inputs are shown in Fig. 9. In all of these three subplots, the body accelerations are minimized in the critical 2.5-8 Hz range where the human vibration sensitivity to accelerations is mot prominent.

All of the singular-value plot results discussed above assume an active suspension control, where the actuator is not only dissipating energy, but also providing energy into the system. For semi-active control, however, the continuously variable suspension dampers act as passive devices that are only capable of dissipating energy. For this reason, the demand forces need to be active only when the sign of relative velocity and the demand forces are same. The results of adding this passivity constraint are shown in the following co-simulation plots where a nonlinear vehicle model residing in CarSim® is used with the controller and passivity constraints present in the Simulink® environment. (The Simulink® nonlinear dynamic system modeling software is available from MathWorks, Inc. of Natick, Massachusetts). For purposes of this example, the continuously variable semi-active damper is assumed to be ideal and delay-free running at 1 ms loop-time.

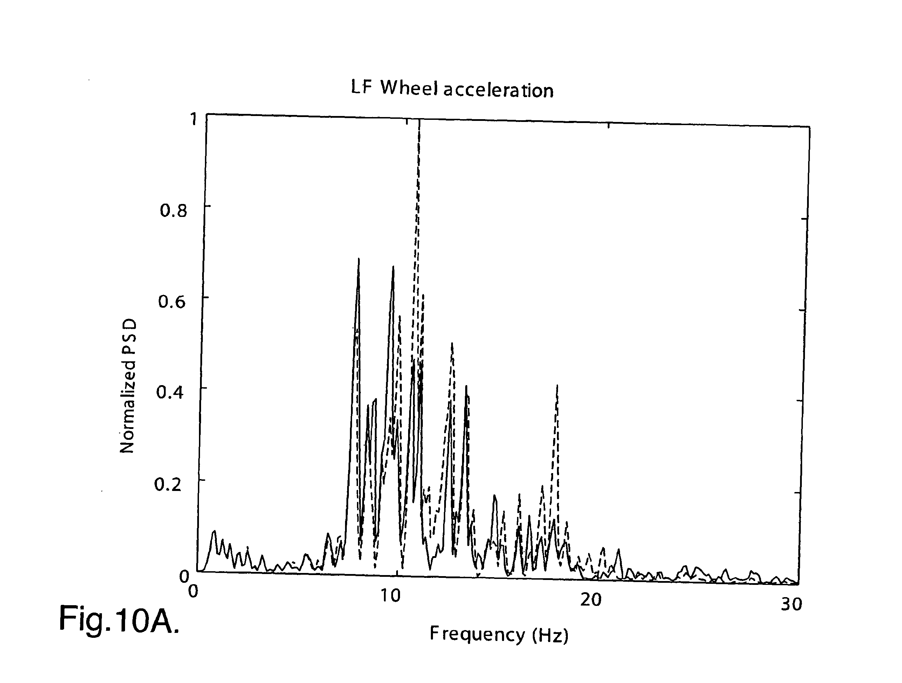

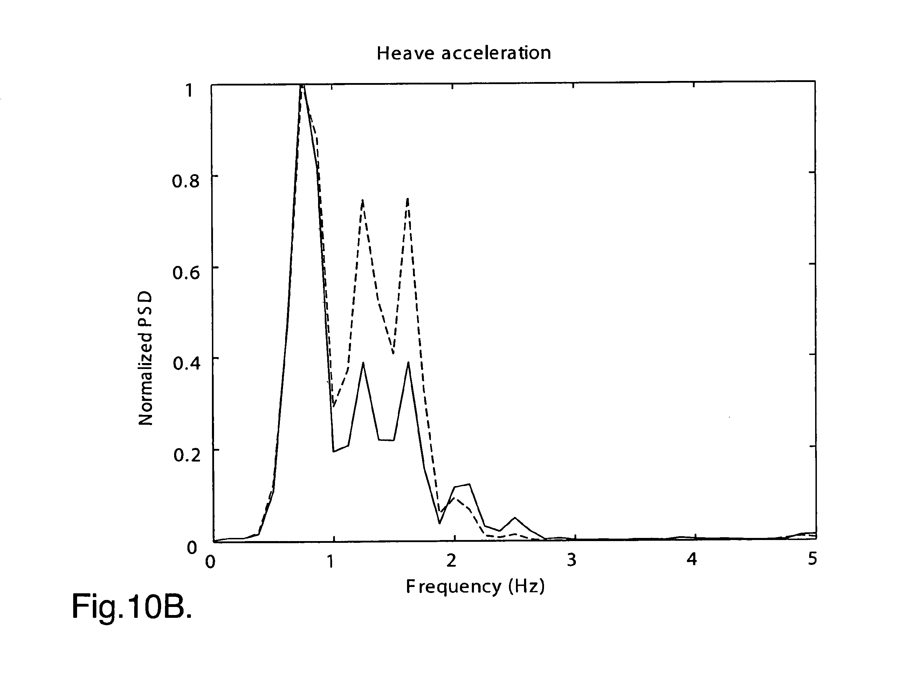

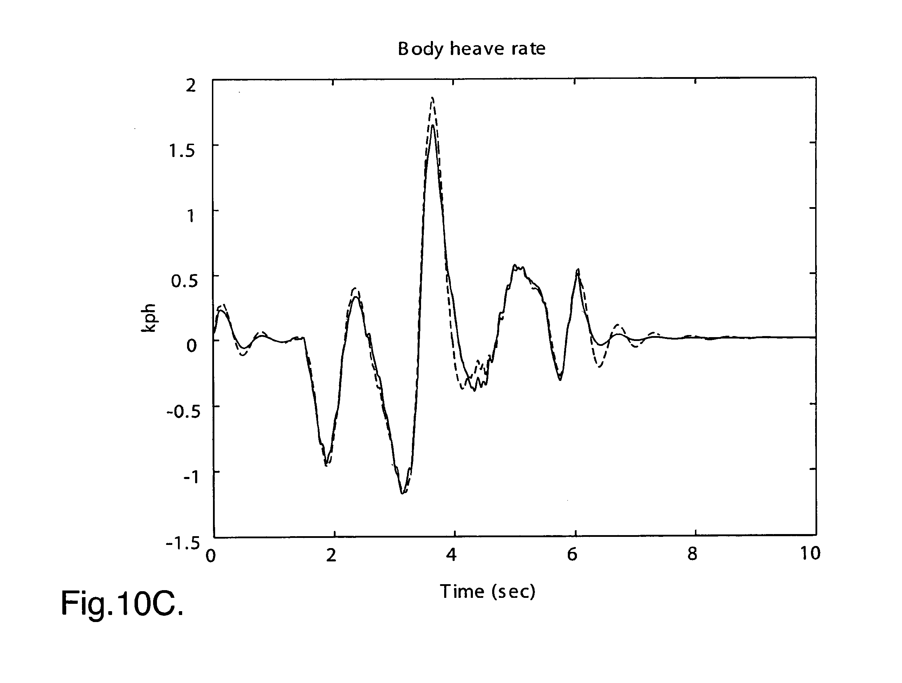

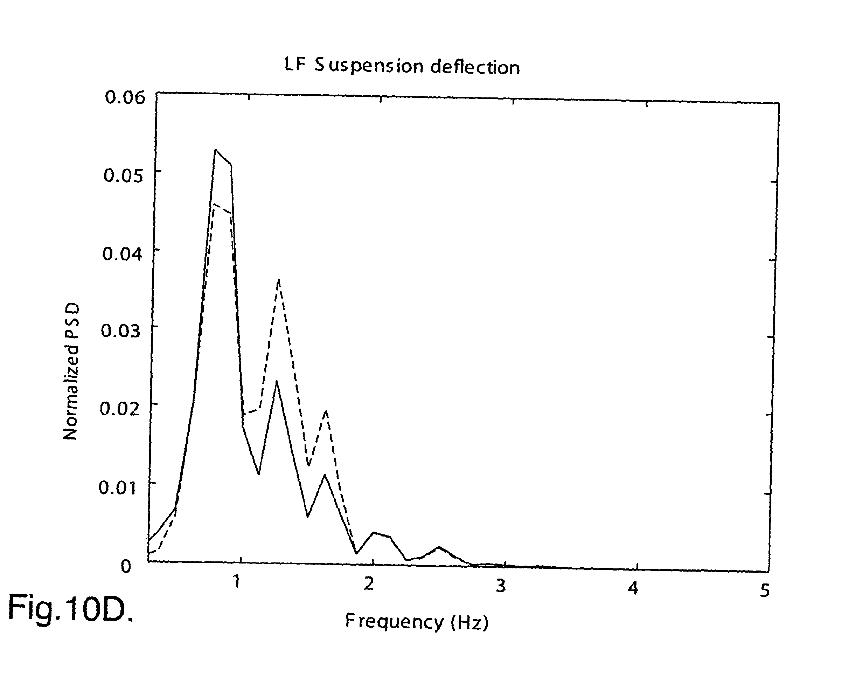

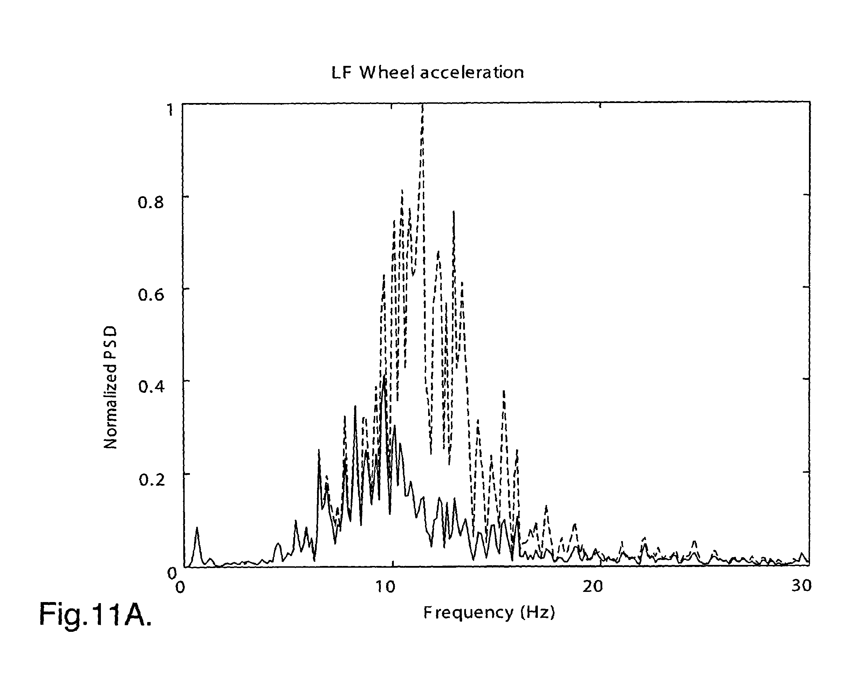

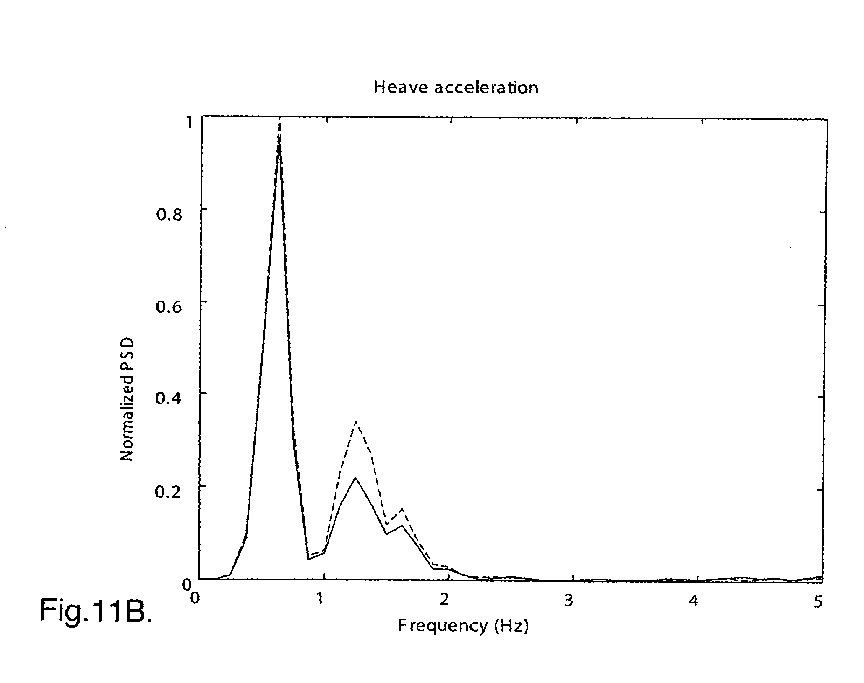

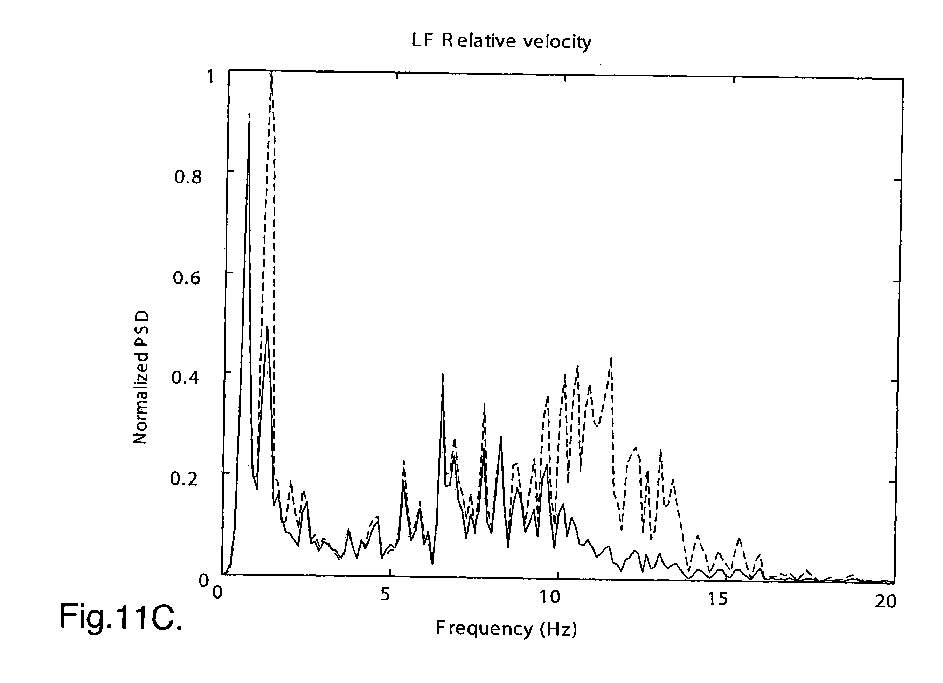

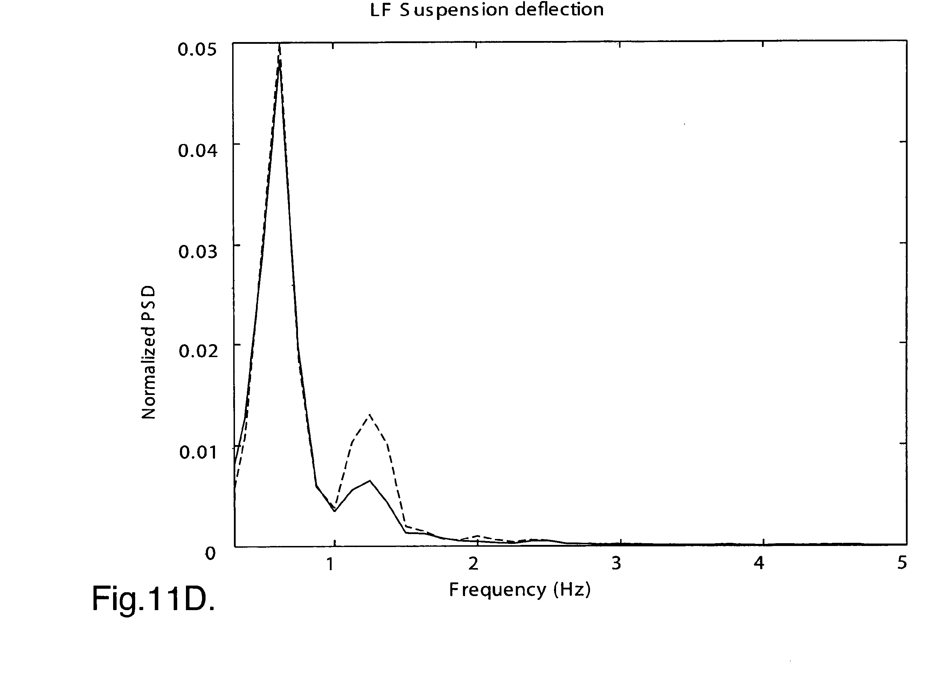

Fig. 10 shows the simulated vehicle's response to a bump when traveling at 60 kph. Normalized PSD plots body and wheel accelerations are compared for the simulated vehicle equipped with passive and controlled dampers. It is apparent from the plots of Fig. 10 that both the body and wheel accelerations are effectively minimized in their respective frequency ranges, without any significant compromise. In general, lower wheel accelerations result in a larger tire patch contacting the road surface, thus implying improved road-holding capability. The heave rate time response of the sprung mass with a controllable damper set exhibits a well damped flat-ride as compared to a passive case. There is also no ringing motion of the sprung mass at steady-state. Except at vary low frequencies (<1 Hz), the suspension deflection at LF corner is shown to be well constrained. Similar optimal balance between body and wheel control is shown in Fig. 11 where the vehicle traveling at 60 kph passes over a series of ride swells.

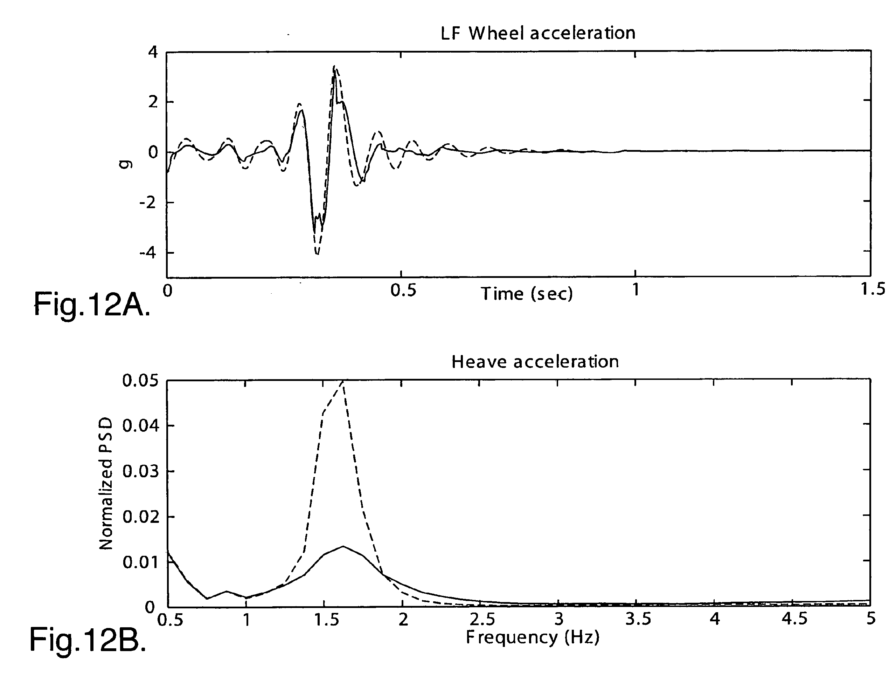

In all aspects, the closed-loop controller developed according to the procedure described in detail above demonstrated better body and wheel control as compared to an optimally tuned passive vehicle. To demonstrate the improvements in both impact harshness and wheel control a simulation was run in which the vehicle travels over multiple impulses (i.e. bumps in road) with the closed-loop control of the present invention switched on. Figs. 12A and 12B show that the magnitudes of both the wheel and body accelerations are significantly reduced compared to the base vehicle indicating no compromise was made in achieving the desired objectives. Thus, the controller $K_c$ developed according to the procedure described above provides a greatly improved trade-off between ride and handling compared to known _.

Road-Test Results

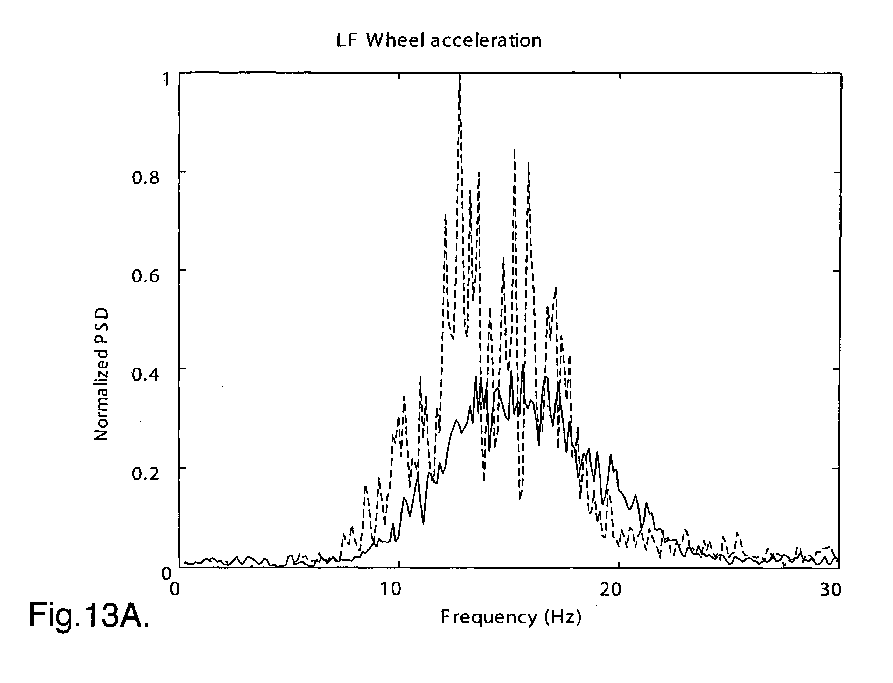

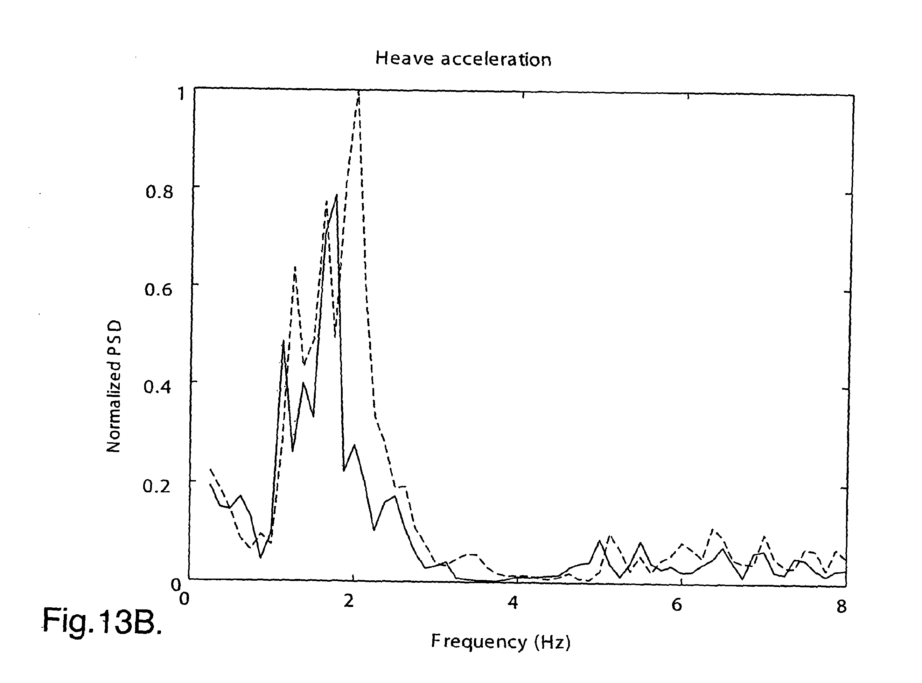

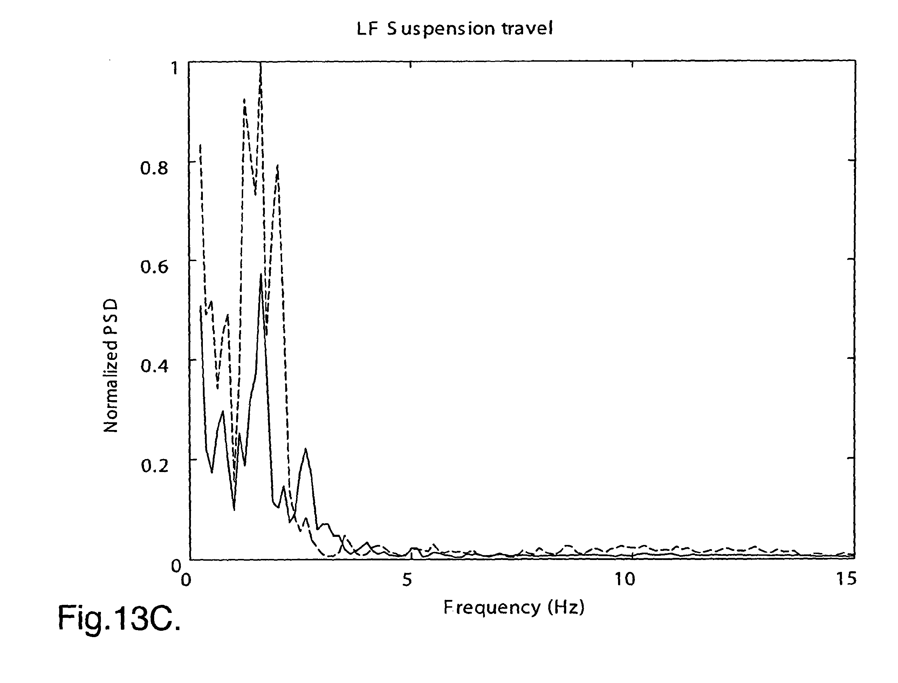

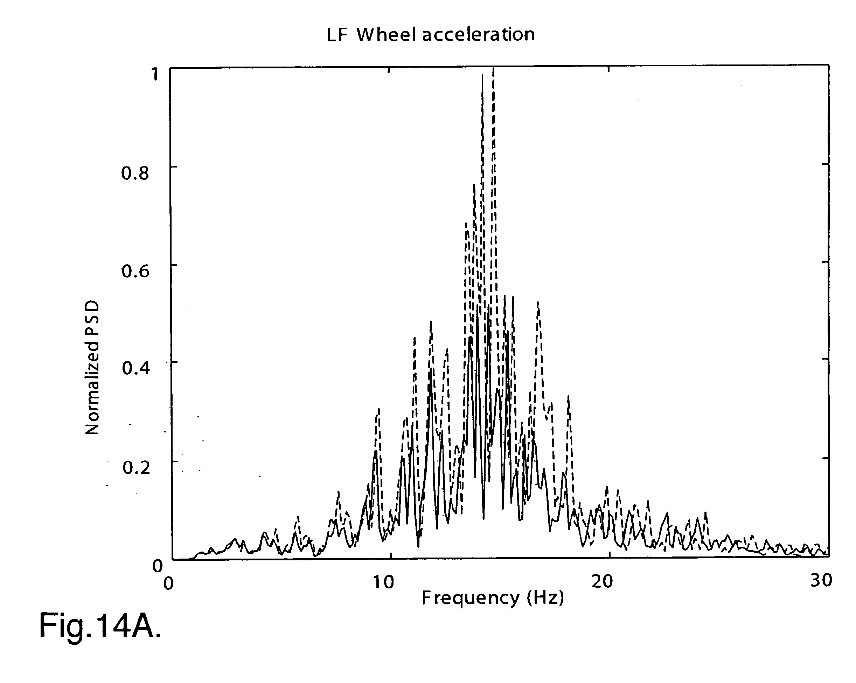

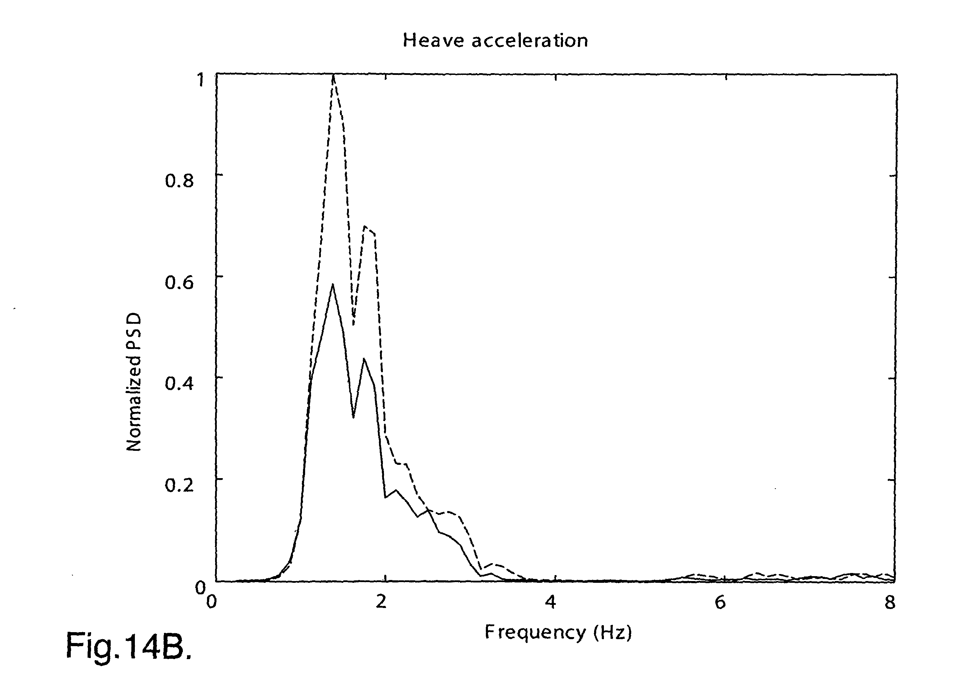

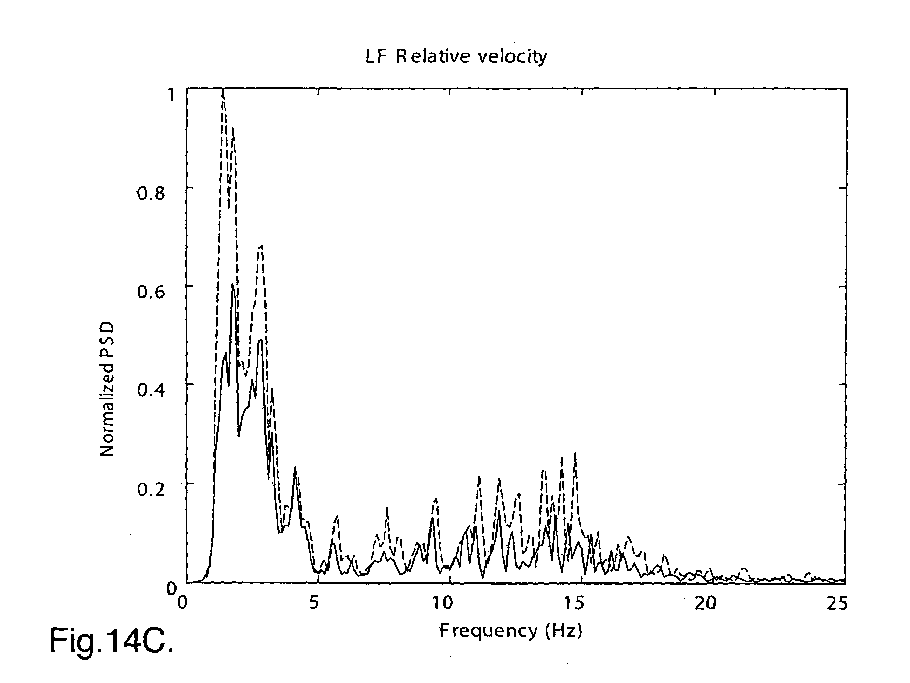

The above controller was implemented in a test vehicle equipped with a set of four electronically controlled magneto-rheological (MR) semi-active dampers. The states required for feedback are obtained through a combination of sensors and estimation scheme. The sensors and estimation scheme for the feedback are known, and will therefore not be described in detail herein. Also, the test vehicle is also equipped with a known commercially available rapid-prototyping controller available from dSPACE Inc., Novi, Michigan. A c-code is generated from the Simulink® software, and this c-code is downloaded into the controller in the test vehicle. The c-code is generated using a "Real-Time Workshop" MathWorks® software tool. Figs. 13A-13C show the response of the vehicle when going over an impact bump at 45 mph. Normalized PSD plots of the LF wheel acceleration, body acceleration and LF suspension travel all indicate significant performance improvement over that of a vehicle equipped with production-tuned passive dampers. Similar results of performance improvement are also shown in Figs. 14A-14C where the vehicle travels through a large dip in the road at 55 mph. Figs. 13A-13C and Figs. 14A-14D both demonstrate the effectiveness of the integrated strategy of the present invention in reducing the magnitude of body and wheel control metrics simultaneously without any significant compromise.

The control synthesis procedure described above for road-induced ride (body) and wheel (vertical handling) control includes a method utilized to calculate a state-feedback gain matrix to command desired demand forces to the continuously variable semi-active dampers. The necessary states required for feedback are available through a known combination of sensors and estimation schemes. A set of frequency-weighted metrics are first quantified and used as part of a full-car 7 DOF vehicle model to construct a constrained multi-objective optimization problem. Using LMI techniques (i.e. commercially available software), a mixed-$H_2/H_\infty$ problem is iteratively solved to minimize a set of body control objectives subject to a set of physical control and wheel control related constraints to obtain a plot of the trade-off curve. The control engineer then selects a sub-optimal design point from the curve to calculate a state-feedback gain matrix that provides a reasonable balance between body and wheel control objectives. Both the time as well as frequency domain analysis, namely the singular-value and the power-spectral density plots, illustrate the effectiveness of the control strategy and method of the present invention in achieving a well balanced performance improvement in the two, often conflicting, body and wheel control objectives. As discussed above, this has been demonstrated using nonlinear vehicle model-in-the-loop simulations as well as actual vehicle road-test results. The synthesis procedure and method is also simple, yet effective, resulting in a controller, which from a computational point-of-view, is relatively easier to implement than dynamic compensators, which in contrast, involves integration of several first order differential equations.

One application of the present invention is in a vehicle semi-active suspension system having variable force dampers as described above. It will be readily apparent, however, that the same basic controller synthesis approach can be utilized to determine gain settings for fully active suspension components. Also, the example given above relates to body and wheel control metrics, but it will be readily apparent that the same approach can be utilized to determine an optimum trade-off between other conflicting design criteria that are affected by the same set of gains of a closed-loop control system.

The above description is considered that of the preferred embodiments only. Modifications of the invention will occur to those skilled in the art and to those who make or use the invention. Therefore, it is understood that the embodiments shown in the drawings and described above are merely for illustrative purposes and not intended to limit the scope of the invention, which is defined by the following claims as interpreted according to the principles of patent law, including the doctrine of equivalents.

## Claims

**1.**   A method of synthesizing gains of a controller of a vehicle having a suspension system that includes a variable force damper system responsive to the controller, and sensors providing input to the controller, the method comprising:

    selecting a plurality of frequency weighted wheel control metrics;
    selecting a plurality of frequency weighted body control metrics;
    determining the minimum H infinity norm for the wheel control metrics to define a scalar lower bound for the wheel control metrics;
    minimizing the $H_2$ norm for the body control metrics subject to the minimum H infinity norm for the wheel control metrics;
    gradually increasing the lower bound and minimizing the $H_2$ norm for a plurality of values of the lower bound to thereby generate multiple pairs of data corresponding to a plurality of optimum trade-offs between the H infinity values and the $H_2$ values that can be plotted to form a curve representing the optimum trade-offs;
    selecting a pair of data adjacent the curve; and
    setting control gains of the controller utilizing control gain values associated with the curve.

2. The method of claim 1, including:

   plotting a trade-off curve of $H_2$ norms vs. the H infinity norm of all constraints; and
   selecting a point on the curve.

3. The method of claim 2, including:

   selecting a plurality of points from the trade-off curve;
   calculate a plurality of corresponding feedback gain matrices.

4. The method of claim 2, including:

   calculating a feedback gain matrix that corresponds to the point selected;
   incorporate the feedback gain matrix in a computer simulation of a vehicle subject to at least one road input.

5. The method of claim 4, including:

   selecting a plurality of points from the trade-off curve;
   calculating a plurality of feedback gain matrices;
   conduct a plurality of vehicle simulations incorporating the feedback gain matrices.

6. The method of claim 5, including:

   selecting a feedback gain matrix based, at least in part, on the vehicle simulations.

7. The method of claim 6, including:

   incorporating the feedback gain matrix into the controller of a vehicle.

8. The method of claim 1, wherein:

   the wheel control metrics are weighted for a range of about 2.5 to 8.0 Hertz.

9. The method of claim 1, wherein:

   the body control metrics are weighted for a range of about 9-12 Hertz.

10. A method of synthesizing gains of a controller of a vehicle having a suspension system that includes an active suspension system responsive to the controller, and sensors providing input to the controller, the method comprising:

    selecting a plurality of first control metrics that are weighted to a first frequency range;
    selecting a plurality of second control metrics that are weighted to a second frequency range that is different than the first frequency range;
    determining the minimum H infinity norm for the first control metrics to define a scalar lower bound for the first control metrics;
    minimize the $H_2$ norm for the second control metrics subject to the minimum H infinity norm for the first control metrics;
    gradually increasing the lower bound value and minimizing the $H_2$ norm for a plurality of values of the lower bound to thereby generate multiple pairs of data corresponding to a plurality of optimum trade-offs between the H infinity values and the $H_2$ values that can be plotted to form a curve representing the optimum trade-offs;
    setting the control gains of the controller utilizing control gain values associated with the at least one solution.

11. The method of claim 10, wherein:

    the first frequency range is about 2.5 to 8.0 Hertz.

12. The method of claim 11, wherein:

the second frequency range is about 9-12 Hertz.

**13.** The method of claim 10, wherein:

the first control metrics comprise wheel control metrics.

**14.** The method of claim 13, wherein:

the wheel control metrics comprise tire deflection velocities.

**15.** The method of claim 10, wherein:

the second control metrics comprise angular accelerations of the vehicle body.

**16.** A method of setting the gains of a controller of a vehicle having a suspension system that includes a variable force suspension component responsive to the controller, and sensors providing input to the controller, the method comprising:

selecting a plurality of frequency weighted wheel control metrics;
selecting a plurality of frequency weighted body control metrics;
determining an H infinity norm for the wheel control metrics;
minimize the $H_2$ norm for the body control metrics subject to the H infinity norm for the wheel control metric;
gradually changing the H infinity norm and minimizing the $H_2$ norm for a plurality of values of the H infinity norm to thereby generate multiple pairs of data corresponding to a plurality of optimum trade-offs between the H infinity values and the $H_2$ values; and
setting the control gains of the controller utilizing information concerning the multiple pairs of data.

**17.** The method of claim 16, including:

plotting the pairs of data to form a curve representing the optimum trade-offs.

**18.** The method of claim 17, including:

selecting a point on the curve;
calculating a feedback gain matrix;
testing the vehicle response to gain matrix.

**19.** The method of claim 18, wherein:

the vehicle response is tested utilizing a computer model of a vehicle.

**20.** The method of claim 19, wherein:

a plurality of points on the curve are selected, a plurality of gain matrices are calculated, and a plurality of computer simulations are conducted utilizing the gain matrices to thereby iteratively determine an optimum gain matrix.

Fig.1.

PRIOR ART

EP 1 787 834 A1

SOLVE UNCONSTRAINED H
WHEEL CONTROL OPTIMIZATION PROBLEM

$\longrightarrow$ MINIMIZE: $\left\| \dfrac{^{cl}q_{whl/susp}}{B_1d} \right\|_\infty$

FIND THE OPTIMUM (MINIMUM)
$H^2$ -NORM ($Y^W$)

SOLVE CONSTRAINED H BODY CONTROL
OPTIMIZATION PROBLEM
WITH WHEEL METRICS INCLUDING SUSPENSION
AS CONSTRAINTS HAVE AN UPPER BOUND ($Y^W$)

$\longrightarrow$ MINIMIZE: $\left\| \dfrac{^{cl}q_{bdy}}{B_1d} \right\|$

SUBJECT TO: $\left\| \dfrac{^{cl}q_{whl/susp}}{B_1d} \right\|_\infty < Y^W$

INCREASE $Y^W$
(H -NORM)

FIND THE OPTIMUM (MINIMUM)
$H^2$ -NORM ($Y_{bj}$)

PLOT $Y^W$ . $Y_{bj}$
(H VS. $H^2$)

SELECT OPTIMUM TRADE-OFF POINT

# Fig.1A.

WHEEL CONTROL $\longleftarrow$ $H_2$ PERFORMANCE $\longrightarrow$ BODY CONTROL

Roll

Front

Rear

Fig.2B.

Warp

Front

Rear

Fig.2D.

Front

Rear

Heave

Fig.2A.

Front

Rear

Pitch

Fig.2C.

Road Input
Road Input Velocities

d

Full Car
Model

Y

Weighted Body & Wheel
Control Metrics

Sensors and/or
Estimator

X

Control Gain
Matrix

U

Fig.3.

Fig.4.

Heave Road Velocity Input

Fig.5A.

Frequency (rad/sec)

Heave Tire Deflection (dB)

EP 1 787 834 A1

Fig.5B.

Fig.5C.

Warp Road Velocity Input

Fig.5D.

EP 1 787 834 A1

Heave Road Velocity Input

Fig.6A.

EP 1 787 834 A1

Fig.6B

Fig.6C.

Pitch Road Velocity Input

Pitch Susp Deflection (dB)

Frequency (rad/sec)

Warp Road Velocity Input

Fig.6D.

EP 1 787 834 A1

Heave Road Velocity Input

Fig.7A.

EP 1 787 834 A1

Roll Road Velocity Input

Fig.7B.

EP 1 787 834 A1

Pitch Road Velocity Input

Fig.7C.

EP 1 787 834 A1

## Warp Road Velocity Input

Fig.7D.

EP 1 787 834 A1

Heave Road Velocity Input

Fig.8A.

EP 1 787 834 A1

Fig.8B.

EP 1 787 834 A1

Pitch Road Velocity Input

Fig.8C.

Frequency (rad/sec)

Warp Road Velocity Input

Fig.8D.

EP 1 787 834 A1

Heave Road Velocity Input

Fig.9A.

## Roll Road Velocity Input

Fig.9B.

EP 1 787 834 A1

Pitch Road Velocity Input

Fig.9C.

LF Wheel acceleration

Fig.10A.

EP 1 787 834 A1

Fig.10B.

EP 1 787 834 A1

Body heave rate

Fig.10C.

Fig.10D.

Fig.11A.

Heave acceleration

Fig.11B.

Fig.11C.

Fig.11D.

LF Wheel acceleration

Fig.12A.

Heave acceleration

Fig.12B.

EP 1 787 834 A1

LF Wheel acceleration

Normalized PSD

Frequency (Hz)

Fig.13A.

Fig. 13B.

LF Suspension travel

Fig.13C.

EP 1 787 834 A1

Fig.14A.

Heave acceleration

Fig.14B.

EP 1 787 834 A1

Fig.14C.

**European Patent Office**

**EUROPEAN SEARCH REPORT**

Application Number

EP 06 07 6988

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,A | PETER GASPAR ET AL: "MIXED H2/H00 CONTROL DESIGN FOR ACTIVE SUSPENSION STUCTURES" PERIODICA POLYTECHNICA SER. TRANSP. ENG., vol. 28, no. 1-2, 2000, pages 3-16, XP008074532 * the whole document * | 1,10,16 | INV. B60G17/018 |
| D,A | JIANBO LU ET AL: "Multiobjective Optimal Suspension Control to Achieve Integrated Ride and Handling Performance" IEEE TRANSACTIONS ON CONTROL SYSTEMS TECHNOLOGY, IEEE SERVICE CENTER, NEW YORK, NY, US, vol. 10, no. 6, November 2002 (2002-11), XP011071737 ISSN: 1063-6536 * the whole document * | 1,10,16 | |

TECHNICAL FIELDS
SEARCHED        (IPC)

B60G

The present search report has been drawn up for all claims

| Place of search | Date of completion of the search | Examiner |
|---|---|---|
| The Hague | 23 February 2007 | Schultze, Yves |

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6516257 B
- US 5235529 A
- US 5096219 A
- US 5071157 A
- US 5062657 A
- US 5062658 A

### Non-patent literature cited in the description

- **PÉTER GÁSPÁR ; ISTVÁN SZÁSZI ; JÓZSEF BOKOR.** Mixed H2/H∞ control design for active suspension structures. *Periodica Polytechnica Ser. Transp. Eng.,* 2000, vol. 28 (1-2), 3-16
- **JIANBO LU ; MARK DEPOYSTER.** Multi-objective optimal suspension control to achieve integrated ride and handling performance. *IEEE Transactions on Control Systems Technology,* November 2002, vol. 10 (6
- **RAO CHALASANI.** Ride performance potential of active suspension systems - Part II: Comprehensive analysis based on a full-car model. *ASME AMD, Symposium on simulation and control of ground vehicles and transportation systems,* 1987, vol. 80, 205-234